(19) Europäisches Patentamt / European Patent Office / Office européen des brevets

(11) **EP 4 764 955 A1**

(12) **EUROPEAN PATENT APPLICATION**

(43) Date of publication:
24.06.2026 Bulletin 2026/26

(21) Application number: 25217770.4

(22) Date of filing: 21.11.2025

(51) International Patent Classification (IPC):
**G06N 3/063** (2023.01)   **G06N 3/0455** (2023.01)
**G06N 3/0464** (2023.01)   **G06N 3/084** (2023.01)
**G06N 3/09** (2023.01)

(52) Cooperative Patent Classification (CPC):
G06N 3/09; G06N 3/0455; G06N 3/0464;
G06N 3/063; G06N 3/084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.12.2024 US 202463738177 P
11.06.2025 US 202519235380

(71) Applicant: **INTEL Corporation**
**Santa Clara, CA 95054 (US)**

(72) Inventors:
• **PALLA, Alessandro**
**56128 Pisa (IT)**
• **GHOSH, Soumendu Kumar**
**Hillsboro, OR, 97124 (US)**
• **Arnab, RAHA**
**San Jose, CA, 95136 (US)**

(74) Representative: **Rummler, Felix et al**
**Maucher Jenkins**
**Seventh Floor Offices**
**Artillery House**
**11-19 Artillery Row**
**London SW1P 1RT (GB)**

(54) **TRAINING AND FINE-TUNING NEURAL NETWORK ON NEURAL PROCESSING UNIT**

(57)     A kernel on a neural processing unit may perform matrix multiplications (MatMuls) on tensors of various dimensions. A neural network may be trained through a forward operation and backward operation, both of which may be offloaded to the kernel. For the forward operation, the kernel may execute a layer by performing a MatMul on an input tensor and weight tensor and produce an output tensor. A loss may be computed. For the backward operation, the kernel may compute a weight gradient of the loss by performing a MatMul on the input tensor and a gradient of the output tensor and compute an input gradient of the loss by performing a MatMul on the gradient of the output tensor and the weight tensor. The gradient of the output tensor may be computed using an automatic differentiation module. The weight tensor may be updated based on the input gradient and weight gradient.

FIG. 1

EP 4 764 955 A1

**Description**

<u>Cross-Reference to Related Application</u>

This application claims the benefit of U.S. Provisional Patent Application No. 63/738,177, filed December 23, 2024, and titled "TRAINING AND FINE-TUNING OF NEURAL NETWORK ON NEURAL PROCESSING UNIT," which is incorporated by reference in its entirety for all purposes.

<u>Technical Field</u>

This disclosure relates generally to neural networks (also referred to as "deep neural networks" or "DNN"), and more specifically, training and fine-tuning DNNs on neural processing units (NPUs).

<u>Background</u>

DNNs are used extensively for a variety of artificial intelligence (AI) applications ranging from computer vision to speech recognition and natural language processing due to their ability to achieve high accuracy. However, the high accuracy comes at the expense of significant computation cost. Before DNNs can be used for AI tasks, they need to be trained. For some applications, pretrained DNNs need to be further fine-tuned. Training or fine-tuning DNNs has extremely high computing demands as there can be many operations as well as a large amount of data to read and write.

<u>Brief Description of the Drawings</u>

Embodiments can be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 is a block diagram of an AI system, in accordance with various embodiments.
FIG. 2 illustrates an example convolution, in accordance with various embodiments.
FIG. 3 illustrates a MatMul operation, in accordance with various embodiments.
FIG. 4 illustrates operations in a forward pass of a DNN training process, in accordance with various embodiments.
FIG. 5 illustrates a forward pass offloaded to a MatMul kernel of a NPU, in accordance with various embodiments.
FIG. 6 illustrates a backward pass offloaded to a MatMul kernel of a NPU, in accordance with various embodiments.
FIG. 7 is a flowchart of a method of training a DNN, in accordance with various embodiments.
FIG. 8 illustrates an example transformer model, in accordance with various embodiments.
FIG. 9 illustrates an example CNN, in accordance with various embodiments.
FIG. 10 is a block diagram of a neural processing unit (NPU), in accordance with various embodiments.
FIG. 11 illustrates an example sparse cell, in accordance with various embodiments.
FIG. 12 illustrates an example sparse cell array, in accordance with various embodiments.
FIG. 13 illustrates an example processing element (PE), in accordance with various embodiments.
FIG. 14 is a block diagram of an example computing device, in accordance with various embodiments.

<u>Detailed Description</u>

<u>Overview</u>

The last decade has witnessed a rapid rise in AI based data processing, particularly based on DNNs. DNNs are widely used in the domains of computer vision, speech recognition, image, and video processing mainly due to their ability to achieve beyond human-level accuracy. A DNN typically includes a sequence of layers. A DNN layer may include one or more operations, such as matrix multiplication, convolution, interpolation, layer normalization, batch normalization, SoftMax operation, pooling, elementwise operation, linear operation, nonlinear operation, and so on. These operations are referred to as deep learning operations or neural network operations.

Neural network operations may be tensor operations. Input or output data of neural network operations may be arranged in data structures called tensors. Taking a convolutional layer for example, the input tensors include an activation tensor (also referred to as "input feature map (IFM)" or "input activation tensor") including one or more activations (also referred to as "input elements") and a weight tensor. The weight tensor may be a kernel (a 2D weight tensor), a filter (a 3D weight tensor), or a group of filters (a 4D weight tensor). A convolution may be performed on the input activation tensor and weight tensor to compute an output activation tensor in the convolutional layer.

A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher dimensional tensors. A dimension of a tensor may correspond to an axis, e.g., an axis in a coordinate system. A dimension may be measured by the number of data points along the axis. The dimensions of a tensor may define the shape of the tensor. A DNN layer may receive one or more input tensors and compute an output tensor from the one or more input tensors. In some embodiments, a 3D tensor may have an X-dimension, a Y-dimension, and Z-dimension. The X-dimension of a tensor may be the horizontal dimension, the length of which may be the width of the tensor; the Y-dimension may be the vertical dimension, the length of which may be the height of the tensor; and the Z-dimension may be the channel dimension, the length of which may be the number of channels. The coordinates of the elements along a dimension may be integers in an inclusive range from 0 to (L - 1), where L is the length of the tensor in the dimension. For instance, the x coordinate of the first element in a row may be 0, the x coordinate of the second element in a row may be 1, and so on. Similarly, the y coordinate of the first element in a column may be 0, the y coordinate of the second element in a column may be 1, and so on. A 4D tensor may have a fourth dimension, which may indicate the number of batches in the operation.

In recent years, the rapid advancement of AI and deep learning has highlighted the need for more efficient, high-performance hardware accelerators tailored for DNN workloads. General-purpose processors, such as central processing units (CPUs) and graphics processing units (GPUs), have proven to be inadequate for certain deep learning applications, particularly when faced with resource constraints in mobile, embedded, and edge environments. This inadequacy can be overcome by using NPUs, which are typically designed to efficiently handle computationally intensive tasks in DNN training and inference. While NPUs can offer significant advantages in energy efficiency and processing speed, training and fine-tuning DNNs on these architectures present unique challenges.

Training or fine-tuning a DNN usually involves using a dataset to teach it to accurately make predictions. The training or fine-tuning process typically involves iteratively updating the DNN's internal parameters (such as weights) to minimize a loss function, which measures the difference between the DNN's predictions and reference values (such as ground-truth values). Training and fine-tuning DNNs on specialized hardware like NPUs can involve a set of unique technical constraints and demands. NPUs are typically optimized for inference rather than training due to their fixed-function hardware design and limited support for the floating-point precision generally required for gradient-based optimization. As such, training on these devices often requires workarounds or adjustments to optimize the dataflow, minimize memory usage, and avoid precision loss that could degrade model performance.

Currently available training methods are heavily reliant on GPUs or tensor processing units (TPUs), which have established a wide array of techniques and tools, but they often cannot be directly transferred to NPUs due to fundamental differences in architecture. Many NPUs are structured around optimized tensor operations and a fixed-function pipeline, which is markedly different from the flexible, programmable pipelines of GPUs and TPUs. Furthermore, state-of-the-art DNN models have increasingly complex architectures, including recurrent, convolutional, and transformer-based networks, which demand high computational power and a large amount of data movement across memory hierarchies. Each layer of these models, particularly in the case of fine-tuning where layers may be frozen or adjusted based on prior training, necessitates precise handling of weights, biases, and gradients that is challenging on an NPU.

However, enabling training on the NPU can have significant benefits because it allows for greater flexibility, efficiency, and responsiveness in machine learning applications deployed on edge devices, embedded systems, and mobile platforms. Typically, DNNs are trained on high-performance GPUs or TPUs in centralized data centers and then deployed for inference on specialized hardware like NPUs. This approach, while effective for many applications, has notable limitations in scenarios that require continuous learning, rapid adaptation, and low-latency processing directly on the device. Enabling training on NPUs addresses several key technical and practical needs.

For example, there is a need for edge adaptability and personalized models. Training directly on NPUs can allow models to adapt to changing environments or user-specific data at the edge. For example, a model in a wearable health device could be fine-tuned to an individual's unique patterns, or a smart home device could learn a user's preferences, continuously improving the model without needing to rely on a cloud-based update cycle. There is also a need for reduced latency and real-time learning. Edge devices often operate in real-time contexts where latency is critical, such as autonomous driving or industrial automation. By allowing the NPU to train or fine-tune models on-site, the system can adapt to changing conditions without the delays associated with sending data to remote servers, waiting for updates, and then redeploying the model. There is also a need for enhanced privacy and data security. Training on NPUs can mitigate privacy and security concerns by keeping data on the device rather than transmitting it to a centralized server. This is especially important for applications involving sensitive data, such as healthcare, where maintaining data within the device can help meet regulatory requirements and reassure users about data privacy. Further, there is a need for bandwidth efficiency and cost savings. Constantly sending data to the cloud for retraining can consume significant bandwidth, especially in Internet of Things (IoT) environments where large numbers of devices generate massive volumes of data. Localized training on the NPU can reduce reliance on network infrastructure and saves on both bandwidth and associated cloud processing costs, making it more scalable for large-scale IoT deployments. There is also a need for efficient adaptation to non-stationary data. Many real-world applications encounter non-stationary data, where data distributions shift over time. This usually requires models that can adapt dynamically rather than relying on static, pretrained networks. Training on the NPU can enable real-time adaptation to these distributional shifts, improving model robustness and accuracy in unpredictable conditions. There is a further need for energy efficiency. NPUs are highly energy-efficient compared to general-purpose processors, particularly for the matrix and tensor operations common in neural networks. Training on an NPU, optimized for low-power processing, can allow for energy-efficient model updates, making it feasible to run and train deep learning models even in resource-constrained environments.

Embodiments of the present disclosure may improve on at least some of the challenges and issues described above by providing methods for effectively training and fine-tuning DNNs on NPUs. For instance, the forward and backward passes in a training process or fine-tuning process may be offloaded directly to NPUs, and an automatic differentiation module may be integrated seamlessly with the training flow to automatically compute gradients.

In various embodiments of the present disclosure, a kernel on an NPU may be designed to perform MatMul operations on tensors of various dimensions. The kernel may also be referred to as a MatMul kernel. The process of training or fine-tuning the DNN may be a process of updating weights in the DNN to improve the accuracy of the DNN. For instances, weights are updated to minimize the difference between the DNN's prediction and reference data (such as ground-truth values, etc.). A fine-tuning process may be a process of retraining a previously trained model. Descriptions hereinbelow for DNN training may also apply to fine-tuning. A training process may include forward passes and backward passes through the layers of the DNN. Forward pass is also referred to as forward propagation as data passes through the layers of the DNN in the order the layers are arranged, e.g., from the input layer to hidden layers then to output layers. Backward pass is also referred to as backward propagation as data pass through the layers of the DNN backwards. Operations in the forward passes ("forward operations") and operations in the backward passes ("backward operations") may be converted to MatMul operations. The forward operations and backward operations may be offloaded to the kernel. For a forward operation, an input tensor and a weight tensor of a layer may be provided to the kernel. The kernel may execute the layer by performing a first MatMul operation on the input tensor and weight tensor and produce an output tensor of the layer. A loss may be computed by applying a loss function on the output tensor and reference value(s). For the backward operation corresponding to the forward operation, the kernel may compute a weight gradient of the loss by performing a second MatMul operation on the input tensor and a gradient of the output tensor and compute an input gradient of the loss by performing a third MatMul operation on the gradient of the output tensor and the weight tensor. The gradient of the output tensor may be computed using an automatic differentiation module that runs on the NPU or a CPU. The input gradient may be propagated backwards to the previous layer of the neural network. The input tensor may be an output tensor of the previous layer. The weight tensor may be updated based on the input gradient and weight gradient to minimize the loss. The kernel may perform a series of forward operations and backward operations till the accuracy of the DNN reaches a desirable level.

With the approach in this disclosure, on-device training and fine-tuning can be directly performed on NPUs, enabling real-time model adaptation and personalized AI solutions. This approach provides the possibility of continuous and autonomous learning at edge devices and provides AI systems with the ability to become more intelligent, personalized, and responsive. This approach can reduce the need for additional infrastructure, minimize latency, and enhance data privacy, making it ideal for applications in dynamic, data-sensitive environments. These advantages can be especially impactful as AI expands into domains where real-time adaptation, privacy, and cost-effective scalability are essential, such as healthcare, smart cities, autonomous systems, and IoT networks.

For purposes of explanation, specific numbers, materials and configurations are set forth in order to provide a thorough understanding of the illustrative implementations. However, it can be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations are described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

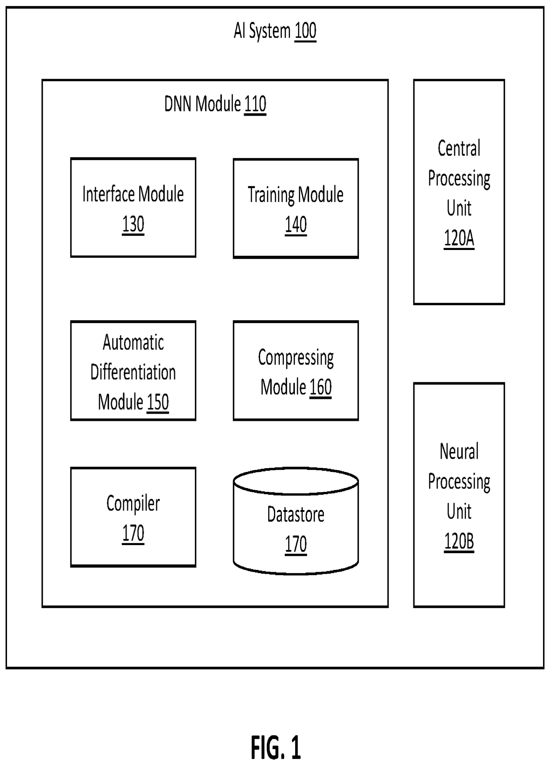

FIG. 1 is a block diagram of an AI system 100, in accordance with various embodiments. The AI system 100 includes a DNN module 110, a CPU 120A, and an NPU 120B. In other embodiments, alternative configurations, different or additional components may be included in the AI system 100. For instance, the AI system 100 may include multiple CPUs or NPUs. Also, the AI system 100 may include other types of processing units, such as GPU. Further, functionality attributed to a component of the AI system 100 may be accomplished by a different component included in the AI system 100 or a different system. For instance, functionality attributed to the DNN module 110 may be accomplished by a module or system on the CPU 120A or NPU 120B.

The DNN module 110 facilitates generation and deployment of DNNs. In some embodiments, the DNN module 110 may train and fine-tune DNNs. The DNN module 110 may offload operations in DNN training and fine-tuning processes to the NPU 120B. The DNN module 110 may also deploy trained or fine-tuned DNNs for use in AI applications (e.g., language processing, image classification, motion planning, etc.). In some embodiments, the DNN module 110 may facilitate deployment of the DNNs using the NPU 120B. For instance, the DNN module 110 may offload operations for DNN inference to the NPU 120B. DNN inference may be a process of executing a trained or fine-tuned DNN for performing an AI task. In other embodiments, the DNN module 110 may distribute trained or fine-tuned DNNs to devices or systems which may use the DNNs to perform tasks for which the DNNs were trained.

As shown in FIG. 1, the DNN module 110 includes an interface module 130, a training module 140, an automatic differentiation module 150, a compressing module 160, a compiler 170, and a datastore 180. In other embodiments, alternative configurations, different or additional components may be included in the DNN module 110. Further, functionality attributed to a component of the DNN module 110 may be accomplished by a different component included in the DNN module 110 or a different module or system. In some embodiments, the DNN module 110 may be executed on a computer system including the AI system 100. The DNN module 110 may run on an operation system of the computer system. The DNN module 110 may use a processing unit in the computer system, such as the CPU 120A or another CPU.

The interface module 130 facilitates communications of the DNN module 110 with other modules or systems. In some embodiments, the interface module 130 establishes communications between the DNN module 110 with an external database to receive datasets that can be used to train DNNs or fine-tune DNNs. The interface module 130 may also receive datasets to be processed by trained or fine-tuned DNNs for performing AI tasks. In some embodiments, the interface module 130 may receive requests for training, fine-tuning, or deploying DNNs. The requests may be received from applications executed on the same device as the DNN module 110. For instance, the DNN module 110 may be executed on a computing device, and the requests may be received from applications (e.g., word processing applications, image processing applications, browser applications, etc.) running on an operation system of the computing device. The interface module 130 may forward a request or dataset for training or fine-tuning a DNN to the training module 140. The interface module 130 may forward a request or dataset for deploying a DNN to the deploying module 160. In some embodiments, the interface module 130 may distribute trained or fine-tuned DNNs to other systems, e.g., computing devices configured to apply DNNs to perform AI tasks.

The training module 140 trains and fine-tunes DNNs. In various embodiments, a fine-tuning process is considered as a training process. For instance, the fine-tuning process may be a retraining or further training process.

The training module 140 may use a training data set to train a DNN. The training module 140 may generate the training dataset. The training dataset may include training samples and reference values. A training sample may be an input to the DNN. The reference values may represent correct predictions made by the DNN from the training samples. The reference values may be ground-truth values or verified values. In an example where the training module 140 trains an DNN to recognize objects in images, the training module 140 may generate a training dataset that includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the training module 140 to validate performance of a trained DNN. The data portion of the training dataset not including the validation subset may be used to train the DNN.

The training module 140 may determine hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples used for a single update of the DNN's internal parameters. The batch size is the same as or smaller than the number of samples in the training dataset. The training dataset can be divided into one or more batches. The number of batches may define the number of updates of the DNN's internal parameters for a single epoch. The number of epochs may define how many times the entire training dataset is passed forward and backwards through the entire network. One epoch means that each training sample in the training dataset has had an opportunity to update the parameters inside the DNN. The number of epochs may be 1, 5, 10, 50, 100, 500, 1000, or even larger. An epoch may include one or more batches. The training module 140 may train the DNN for a predetermined number of epochs. After the training module 140 finishes the predetermined number of epochs, the training module 140 may stop updating the parameters in the DNN. The DNN having the updated parameters is referred to as a trained DNN.

In some embodiments, the training module 140 may define the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully-connected layers, normalization layers, SoftMax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between two convolution layers. A fully-connected layer involves weights, biases, and neurons. It connects neurons in one layer to neurons in another layer. It is used to classify images between different categories by training. In the process of defining the architecture of the DNN, the training module 140 also adds an activation function to a hidden layer or the output layer. An activation function of a layer transforms the weighted sum of the input of the layer to an output of the layer. The activation function may be, for example, a ReLU activation function, a tangent activation function, or other types of activation functions.

To train a DNN, the training module 140 inputs the training samples into the DNN. The training module 140 modifies the parameters inside the DNN ("internal parameters of the DNN") to minimize the error between the DNN's prediction and target values. The target values may be used as reference values to measure the loss during training. The target values may be actual values (e.g., values indicating ground truth) or values verified to be accurate or true. The internal parameters may be learnable parameters whose values can be optimized by training the DNN. The internal parameters include weights, such as weights in convolutional filters, weights in MHA layers, and so on.

In some embodiments, the training module 140 may define stages in the training process. For example, for each training sample or each epoch, the training module 140 defines a forward pass, a backward pass, and an optimization process. During the forward pass, data propagates forward through the DNN layers. For instance, data (e.g., activations) pass from the input layer to hidden layers, then to the output layer. An output of the DNN, which indicates a prediction of the DNN, may be generated at the last layer, which may be the output layer of the DNN. This part of the forward pass may be an inference process in which the DNN is executed to process the training sample and make a prediction. The inference process may be denoted as $out_{nn} = f_w(x) = f(x, w)$, where $out_{nn}$ is the DNN output, $f$ is the network architecture, and $w$ are the internal parameters (e.g., weights).

The training module 140 may apply gradient descent to train DNNs. After the DNN output is generated, a loss may be computed. The training module 140 may define a loss function that can measure a loss during forward pass. The loss may measure the difference between the DNN output and the actual values. It may provide a measure of error that an optimization algorithm can use to update the internal parameters during the optimization process. In some embodiments, the loss function 420 may be selected, e.g., by the training module 140, from various types of loss functions, such as mean square error (MSE), cross-entropy loss, mean absolute error (MAE), Huber loss, Hinger loss, cosine similarity, Poisson loss, and so on. The computation of the loss function may be denoted as L = $\frac{1}{N}\sum loss(f_w(x), y_{ref})$, where is the loss, $y_{ref}$ is the reference value(s), and $N$ is the number of training samples in a batch.

During the backward pass, data propagates backwards and the DNN is run backwards. The data may be gradients computed using the loss. A gradient may be a partial derivative of a function (e.g., a loss function) with respect to its inputs, which may be the slope of the function. Gradients computed during the backward pass may measure the changes in weights with respect to the change in error or loss. Gradients computed during the backward pass may include output gradients, input gradients, and weight gradients. An output gradient of a layer may be a gradient with respect to the layer output and may be denoted as $\frac{\partial L}{\partial y}$. An input gradient of a layer may be the gradient with respect to the layer input and may be denoted as $\frac{\partial L}{\partial x}$. A weight gradient may be a gradient of each parameter with respect to the layer output and may be denoted as $\frac{\partial L}{\partial W_i}$, where $i$ is the index of the layer. The training module 140 may define a MatMul operation to compute the weight gradient and another MatMul operation to compute the input gradient. The input gradient may be defined as $\frac{\partial L}{\partial x} = \frac{\partial L}{\partial y} * \frac{\partial y}{\partial x}$, where $x$ is the layer input, $W_i$ is the layer parameters, as y is the layer output. The weight gradient may be defined as $\frac{\partial L}{\partial W_i} = \frac{\partial L}{\partial y} * \frac{\partial y}{\partial W_i}$. In some embodiments, the layer being executed in the forward pass may be denoted as y = x * $W_i$. Therefore, the function for the input gradient may become $\nabla_{xi}L = \nabla_y L * \nabla_{xi}y = \nabla_y L * W^T$, where $\nabla_{x_i}L = \frac{\partial L}{\partial x}$, $\nabla_y L = \frac{\partial L}{\partial y}$, and $\nabla_{x_i}y = \frac{\partial y}{\partial x} = W_i = W^T$. The function for the weight gradient may become $\nabla_W L = \nabla_y L * \nabla_W y = x^T * \nabla_y L$, where $\nabla_W L = \frac{\partial L}{\partial W_i}$, $\nabla_y L = \frac{\partial L}{\partial y}$, and $\nabla_W y = \frac{\partial y}{\partial W_i} = x = x^T$. $x^T$ may be an input tensor (e.g., the activation tensor) of the layer. $W^T$ may be a weight tensor of the lawyer. In some embodiments, $\nabla_W L$ may be a tensor having the same spatial shape as $W^T$. The input gradient may be propagated to the previous layer. The weight gradient may be used to update the parameters through an optimization process.

During the optimization process, the internal parameters may be updated using an optimization function. The training module 140 may define the optimization function. An example optimization function may be:

$$W_i^{N+1} = W_i^N - \lambda \nabla_{W_i}L$$, where y is the learning rate, $\nabla_{W_i}L = \frac{\partial L}{\partial W_i}$, N is the index of the current batch, and N + 1 is the index of the next batch.

In some embodiments, the training module 140 may offload MatMul operation in the forward pass and backward pass to a MatMul kernel on the NPU 120B. The MatMul kernel can perform MatMul operations on tensors of various spatial shapes and dimensions. That way, the MatMul kernel can perform the MatMul operations in the forward pass (e.g., the MatMul operations in the layer) as well as the MatMul operations in the backward pass (e.g., the MatMul operations for computing input gradient and weight gradient). The computation of the loss function may be performed by the same MatMul kernel or another kernel on the NPU 120B.

As shown above, the input to the MatMul operations in the backward pass includes an output gradient. The training module 140 may deploy the automatic differentiation module 150 to compute the output gradient during the backward pass. The training module 140 may leverage the functionality of the automatic differentiation module 150 to integrate automated differentiation and seamless gradient tracking into the training flow, thereby reducing the need for manual configuration of backward computations. The training module 140 may instruct the compiler 170 to integrate the automatic differentiation module 150 into executable instructions (e.g., codes) for performing the training process. In some embodiments, the NPU 120B may automatically run the functions in the automatic differentiation module 150 when it executes the executable instructions. In other embodiments, the automatic differentiation module 150 may use the CPU 120A instead of the NPU 120B. The automatic differentiation module 150 provides automatic differentiation capabilities, allowing it to offload both forward and backward passes of only compute intensive operations to the NPU seamlessly, while leaving the rest of the control flow to be handled by the system CPU. The integration of the automatic differentiation module 150 can enable end-to-end gradient tracking and updating on the NPU without requiring users to manually configure each layer's backward computations, making it more accessible and efficient for real-time training applications.

The automatic differentiation module 150 can automatically compute derivatives of tensor operations. In some embodiments, the automatic differentiation module 150 may track tensor operations during the training process, such as the MatMul operation(s) during the forward pass. For instance, the automatic differentiation module 150 may build a dynamic computational graph that tracks the MatMul operation(s). The automatic differentiation module 150 may also record the inputs and outputs of the MatMul operation(s). The automatic differentiation module 150 may use a chain rule to calculate gradients of the output with respect to all tensors that require gradients. An example of the automatic differentiation module 150 is PyTorch Autograd. The functionality of the automatic differentiation module 150 may allow the training loop to compute gradients and update weights without recompiling the DNN. The training module 140 may offload compute intensive operations (e.g., the MatMul operations) to the NPU 120B seamlessly, while leaving the rest of the control flow to be handled by the CPU 120A. By integrating the automatic differentiation module 150, the NPU 120B can perform end-to-end gradient tracking and updating without requiring users to manually configure each layer's backward computations, making it more accessible and efficient for real-time training applications. This approach can retain the speed and efficiency of the NPU 120B, as the forward and backward passes can be executed natively on the NPU 120B, while weights can remain accessible and mutable in the memory of the NPU 120B. Compared with currently available frameworks that are typically designed for inference and require specific adaptations to support training on NPUs effectively, this approach is more advantageous, especially for layers (such as dropout and layer normalization) that have specific requirements for backward computation and runtime and for non-linear operations (such as max-pooling and ReLU) that can introduce complexity in calculating gradients, often requiring control flow operations.

In some embodiments, the training module 140 facilitates mixed-precision training on NPU. For instance, BF16 (brain floating point or bfloat16) and FP16 (half-precision floating point) formats may be used to significantly enhance computational efficiency and reduce memory bandwidth requirements. BF16 and FP16 can be ideal for training DNNs, as they provide a balance between precision and performance. Using these formats allows for faster matrix multiplications and gradient calculations with reduced memory footprint, without a substantial loss in accuracy. The NPU hardware may include dedicated support for BF16 and FP16 operations, enabling high-speed tensor calculations directly in these formats. For instance, the NPU may include one or more memories that can store floating-point data. Also, the NPU may include multipliers, adders, data paths, or other components that support floating-point data formats. Furthermore, the NPU's architecture may be optimized to handle accumulation in higher precision, which mitigates the effects of numerical instability often associated with lower-precision formats. This hardware-based support for mixed-precision training can maximize the throughput of matrix multiplication operations, enhances power efficiency, and accelerates training speeds, making it possible to deploy sophisticated neural network training workflows on resource-constrained edge devices.

In some embodiments, the training module 140 may also verify accuracy of DNNs after training or fine-tuning. In some embodiments, the training module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the training module 140 may determine an accuracy score measuring the precision, recall, or a combination of precision and recall of the DNN. The training module 140 may use the following metrics to determine the accuracy score: Precision = TP / (TP + FP) and Recall = TP / (TP + FN), where precision may be how many the DNN correctly predicted (TP or true positives) out of the total it predicted (TP + FP or false positives), and recall may be how many the DNN correctly predicted (TP) out of the total number of objects that did have the property in question (TP + FN or false negatives). The F-score (F-score = 2 * PR / (P + R)) unifies precision and recall into a single measure.

The training module 140 may compare the accuracy score with a threshold score. In an example where the training module 140 determines that the accuracy score of the DNN is less than the threshold score, the training module 140 instructs the training module 140 to retrain the DNN. In one embodiment, the training module 140 may iteratively retrain the DNN until the occurrence of a stopping condition, such as the accuracy measurement indication that the DNN may be sufficiently accurate, or a number of training rounds having taken place.

The compressing module 160 compresses DNNs. For instance, the compressing module 160 may add compressing operations to DNN layers to reduce computational complexity or memory usage. A compressing operation may modify weights in a DNN layer. The modification may be done before, during, or after training. In some embodiments, the compressing module 160 may select one or more layers in a DNN and modify each selected layer with a compressing operation. For instance, the compressing module 160 may select computationally complex layers, such as a layer with a large number of weights. For a compressing operation of a layer or of a type of layer, the compressing module 160 may determine a weight threshold that would not cause a loss of the accuracy of the DNN to exceed an accuracy loss constraint. A compressing operation may modify weights having absolute values above the weight threshold to lower-precision values or zeros and leave the other weights unchanged.

After compressing a DNN, the compressing module 160 may instruct the training module 140 to fine-tune the DNN. In such fine-tuning process, the values of the unpruned weights in the DNN may be modified, while the values of the pruned weights (i.e., zero) are not changed. For instance, the compressing module 160 may place a mask over a pruned weight block and the mask can prevent values in the pruned weight blocks from being changed during the fine-tuning process. In other embodiments, the values of all weights, including the pruned weights, may be changed during the fine-tuning process. After the fine-tuning process, the compressing module 160 may perform a new pruning process, e.g., by changing more weights to zero. In some embodiments, the weight pruning process may be repeated multiple times before the fine-tuning process is done. In some embodiments, the number of epochs in the fine-tuning process may be different from the number of epochs in the training process in which the pre-pruning values of the weights are determined. For instance, the fine-tuning process may have less epochs than the training process. In an example, the number of epochs in the fine-tuning process may be relatively small, such as 2, 3, 4, 5, and so on.

The compiler 170 compiles DNNs to generate instructions (e.g., configuration parameters, etc.) that can be executed by the CPU 120A or NPU 120B to carry out neural network operations in DNNs, either for training purposes or deployment purposes. In some embodiments, the compiler 170 may generate a graph representing a DNN. The graph may include nodes and edges. A node may represent a specific neural network operation in the DNN. An edge may connect two nodes and represent a connection between the two corresponding neural network operations. In an example, an edge may encode a tensor that flows from one of the neural network operations to the other neural network operation. The tensor may be an output tensor of the first neural network operation and an input tensor of the second neural network operation. The edge may encode one or more attributes of the tensor, such as size, shape, storage format, and so on. The compiler 170 may use the graph to generate executable DNNs. For instance, the compiler may generate computer program instructions for executing DNNs.

In some embodiments, the compiler 170 may generate configuration parameters that may be used to configure components of the NPU 120B for DNN executions. The configuration parameters may be stored in one or more configuration registers associated with the components of the NPU 120B. In some embodiments, the compiler 170 may compile a DNN before the DNN is trained. During the training process, the compiler 170 may perform no compilation. The compiler 170 may recompile the DNN after it is trained. The compiler 170 may perform different complications before and after the training. For instance, the compiler 170 may compile the DNN before training based on the condition that internal parameters of the DNN are to be changed during the training process. The compiler 170 may compile the DNN after training based on the condition that internal parameters of the DNN would remain the same.

The datastore 180 stores data received, generated, used, or otherwise associated with the DNN module 110. For example, the datastore 180 stores the datasets used by the training module 140 to train or fine-tune DNNs. The datastore 180 may also store data generated by the training module 140, such as the hyperparameters for training DNNs, internal parameters of trained DNNs (e.g., weights, etc.), and so on. The datastore 180 may also store data generated by the compressing module 160, such as compressed weights, and so on. The datastore 180 may store instructions, configuration parameters, or other data generated by the compiler 170. The datastore 180 may include one or more memories. In the embodiment of FIG. 1, the datastore 180 is a component of the DNN module 110. In other embodiments, the datastore 180 may be external to the DNN module 110 and communicate with the DNN module 110 through a network.

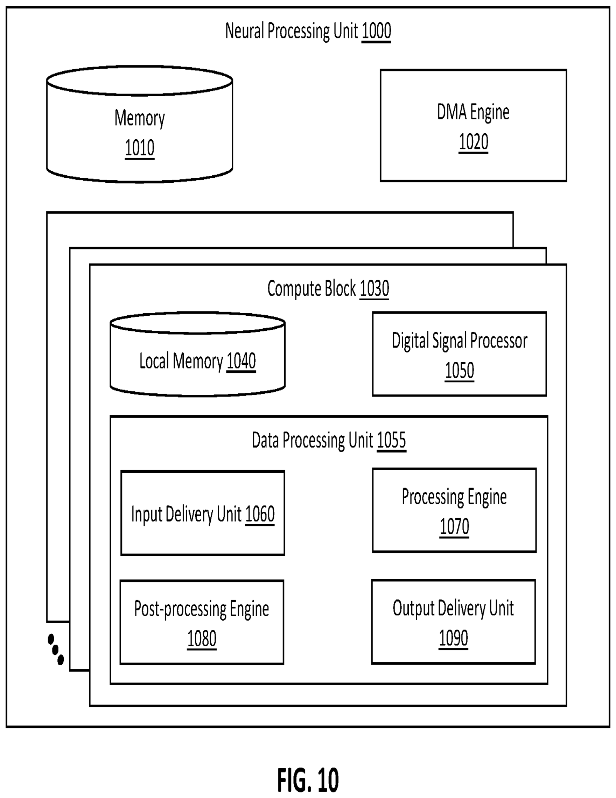

The CPU 120A may be a general-purpose processing unit. The NPU 120B may be designed for accelerating DNNs. In some embodiments, the NPU 120B may leverage parallel processing or data sparsity to accelerate DNN executions. The CPU 120A may be used for controlling DNN training or deployment. For instance, the training module 140 or compiler 170 may run using the CPU 120A. In some embodiments (such as embodiments, the AI system 100 is part of a computing device, such as personal computer, smart phone, tablet, etc.), the CPU 120A may also be used to run other applications, such as word processing applications, image processing applications, browsing applications, and so on. The NPU 120B may be used for performing compute intensive operations (e.g., the MatMul operations described above) for training or deploying DNNs. The CPU 120A and NPU 120B may be collectively referred to as heterogenous processing units 120, individually referred to as "heterogenous processing unit 120." The heterogenous processing units 120 may be implemented in separate chips. For example, each heterogenous processing unit 120 may be implemented as a separate chip. Certain aspects of NPU are described below in conjunction with FIGS. 10-13.

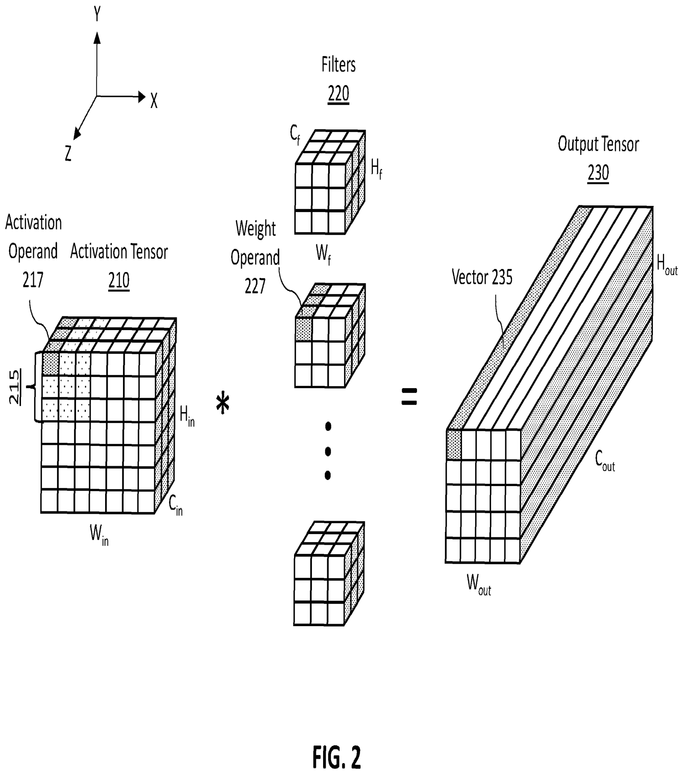

FIG. 2 illustrates an example convolution, in accordance with various embodiments. The convolution may be a deep learning operation in a convolutional layer of a DNN. The convolution can be executed on an activation tensor 210 and filters 220 (individually referred to as "filter 220"). The filters may constitute a weight tensor of the convolution. The result of the convolution is an output tensor 230. In some embodiments, the convolution is performed by a NPU, such as the NPU 120B in FIG. 1. The convolution may include one or more MatMul operations. For instance, each MatMul operation may be performed on the activation tensor 210 and a single filer 220.

The activation tensor 210 may be computed at a previous layer of the DNN. In some embodiments (e.g., embodiments where the convolutional layer is the first layer of the DNN), the activation tensor 210 may be an image. In the embodiments of FIG. 2, the activation tensor 210 includes activations (also referred to as "input activations," "elements," or "input elements") arranged in a 3D matrix. The activation tensor 210 may also be referred to as an input tensor of the convolution. An input element is a data point in the activation tensor 210. The activation tensor 210 has a spatial size $H_{in} \times$

$W_{in} \times C_{in}$, where $H_{in}$ is the height of the 3D matrix (i.e., the length along the Y axis, which indicates the number of activations in a column in the 3D matrix of each input channel), $W_{in}$ is the width of the 3D matrix (i.e., the length along the X axis, which indicates the number of activations in a row in the 2D matrix of each input channel), and $C_{in}$ is the depth of the 3D matrix (i.e., the length along the Z axis, which indicates the number of input channels). For the purpose of simplicity and illustration, the activation tensor 210 has a spatial size of $7 \times 7 \times 3$, i.e., the activation tensor 210 includes three input channels and each input channel has a $7 \times 7$ 2D matrix. Each input element in the activation tensor 210 may be represented by a (X, Y, Z) coordinate. In other embodiments, the height, width, or depth of the activation tensor 210 may be different.

Each filter 220 includes weights arranged in a 3D matrix. The values of the weights may be determined through training the DNN. A filter 220 has a spatial size $H_f \times W_f \times C_f$, where $H_f$ is the height of the filter (i.e., the length along the Y axis, which indicates the number of weights in a column in each kernel), $W_f$ is the width of the filter (i.e., the length along the X axis, which indicates the number of weights in a row in each kernel), and $C_f$ is the depth of the filter (i.e., the length along the Z axis, which indicates the number of channels). In some embodiments, $C_f$ equals $C_{in}$. For purpose of simplicity and illustration, each filter 220 in FIG. 2 has a spatial size of $2 \times 3 \times 3$, i.e., the filter 220 includes 2 convolutional kernels with a spatial size of $2 \times 3$. In other embodiments, the height, width, or depth of the filter 220 may be different. The spatial size of the convolutional kernels is smaller than the spatial size of the 2D matrix of each input channel in the activation tensor 210.

An activation or weight may take one or more bytes in a memory. The number of bytes for an activation or weight may depend on the data format. For example, when the activation or weight has an INT8 format, the activation takes one byte. When the activation or weight has a FP16 format, the activation or weight takes two bytes. Other data formats may be used for activations or weights.

In the convolution, each filter 220 slides across the activation tensor 210 and generates a 2D matrix for an output channel in the output tensor 230. In the embodiments of FIG. 2, the 2D matrix has a spatial size of $5 \times 5$. The output tensor 230 includes activations (also referred to as "output activations," "elements," or "output element") arranged in a 3D matrix. An output activation is a data point in the output tensor 230. The output tensor 230 has a spatial size $H_{out} \times W_{out} \times C_{out}$, where $H_{out}$ is the height of the 3D matrix (i.e., the length along the Y axis, which indicates the number of output activations in a column in the 2D matrix of each output channel), $W_{out}$ is the width of the 3D matrix (i.e., the length along the X axis, which indicates the number of output activations in a row in the 2D matrix of each output channel), and $C_{out}$ is the depth of the 3D matrix (i.e., the length along the Z axis, which indicates the number of output channels). $C_{out}$ may equal the number of filters 220 in the convolution. $H_{out}$ and $W_{out}$ may depend on the heights and weights of the activation tensor 210 and each filter 220. In an example where the kernel size is $1 \times 1$, $H_{out}$ and $W_{out}$ may equal to $H_{in}$ and $W_{in}$, respectively.

As a part of the convolution, MAC operations can be performed on a $3 \times 3 \times 3$ subtensor 215 (which is highlighted with a dotted pattern in FIG. 2) in the activation tensor 210 and each filter 220. The result of the MAC operations on the subtensor 215 and one filter 220 is an output activation. In some embodiments (e.g., embodiments where the convolution is an integral convolution), an output activation may include 8 bits, e.g., one byte. In other embodiments (e.g., embodiments where the convolution is a floating-point convolution), an output activation may include more than one byte. For instance, an output element may include two bytes.

After the MAC operations on the subtensor 215 and all the filters 220 are finished, a vector 235 is produced. The vector 235 is highlighted with a dotted pattern in FIG. 2. The vector 235 includes a sequence of output activations, which are arranged along the Z axis. The output activations in the vector 235 have the same (x, y) coordinate, but the output activations correspond to different output channels and have different Z coordinates. The dimension of the vector 235 along the Z axis may equal the total number of output channels in the output tensor 230. After the vector 235 is produced, further MAC operations are performed to produce additional vectors till the output tensor 230 is produced. In the embodiments of FIG. 2, the output tensor 230 is computed in a Z-major format. When the output tensor 230 is computed in the ZXY format, the vector that is adjacent to the vector 235 along the X axis may be computed right after the vector 235. When the output tensor 230 is computed in the ZYX format, the vector that is adjacent to the vector 235 along the Y axis may be computed right after the vector 235. The output tensor 230 may be permuted, e.g., by the drain module 390, and stored in a memory (e.g., the local memory 340) in an X-major format or Y-major format.

In some embodiments, the MAC operations on a $3 \times 3 \times 3$ subtensor (e.g., the subtensor 215) and a filter 220 may be performed by a plurality of MAC units. One or more MAC units may receive an input operand (e.g., an activation operand 217 shown in FIG. 2) and a weight operand (e.g., the weight operand 227 shown in FIG. 2). The activation operand 217 includes a sequence of activations having the same (x, y) coordinate but different z coordinates. The activation operand 217 includes an activation from each of the input channels in the activation tensor 210. The weight operand 227 includes a sequence of weights having the same (x, y) coordinate but different z coordinates. The weight operand 227 includes a weight from each of the channels in the filter 220. Activations in the activation operand 217 and weights in the weight operand 227 may be sequentially fed into a MAC unit. The MAC unit may receive an activation and a weight ("an activation-weight pair") at a time and multiple the activation and the weight. The position of the activation in the activation operand 217 may match the position of the weight in the weight operand 227. The activation and weight may correspond to the same channel.

Activations or weights may be floating-point numbers. Floating-point numbers may have various data formats, such as FP32, FP16, BF16, and so on. A floating-point number may be a positive or negative number with a decimal point. A floating-point number may be represented by a sequence of bits that includes one or more bits representing the sign of the floating-point number (e.g., positive or negative), bits representing an exponent of the floating-point number, and bits representing a mantissa of the floating-point number. The mantissa is the part of a floating-point number that represents the significant digits of that number. The mantissa is multiplied by the base raised to the exponent to give the actual value of the floating-point number.

In some embodiments, the output activations in the output tensor 230 may be further processed based on one or more activation functions before they are written into the memory or inputted into the next layer of the DNN. The processing based on the one or more activation functions may be at least part of the post processing of the convolution. In some embodiments, the post processing may include one or more other computations, such as offset computation, bias computation, and so on. The results of the post processing may be stored in a local memory of the compute block and be used as input to the next DNN layer.

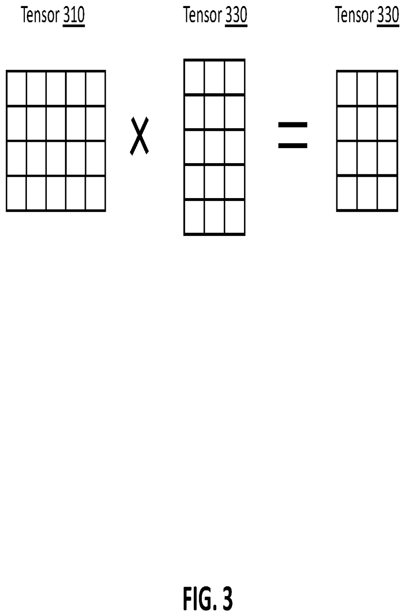

FIG. 3 illustrates a MatMul operation, in accordance with various embodiments. The MatMul operation is performed on a tensor 310 and tensor 320 and produces a tensor 330. In some embodiments, the MatMul operation may be an operation in a DNN layer. The tensor 310 may be generated at the previous layer, and the tensor 320 may include internal parameters of the DNN layer. The tensor 330 may be an output or intermediate tensor of the DNN layer. The DNN layer may be a convolutional layer, a multi-head attention (MHA) layer, or other types of layers. The MatMul operation may be performed in a forward pass of a DNN training process. In other embodiments, the MatMul operation may be performed in a backward pass of a DNN training process. The MatMul operation may be performed to compute gradients. For instanc,e the tensor 330 may be a tensor of input gradients with respect to a loss function or a tensor of weight gradients with respect to a loss function.

For the purpose of illustration, the tensor 310 and tensor 320 are 2D tensors. The spatial size of the tensor 310 is $1 \times 4 \times 5$. The spatial size of the tensor 320 is $1 \times 5 \times 3$. In some embodiments, a dot product is performed between each row of the tensor 310 and each column of the tensor 320 to generate a single point in the tensor 330. The spatial size of the tensor 330 is $1 \times 4 \times 3$. In other embodiments, the tensor 310, tensor 320, or tensor 330 may have a different spatial size. The tensor 310, tensor 320, or tensor 330 be a 3D tensor.

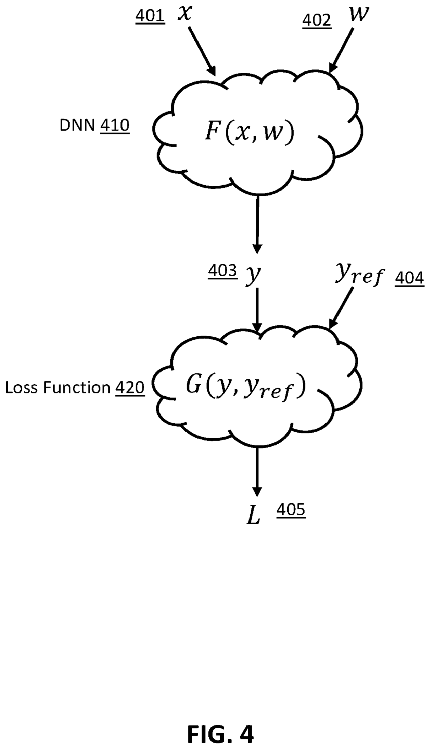

FIG. 4 illustrates operations in a forward pass of a DNN training process, in accordance with various embodiments. The training process is for training a DNN 410. The forward pass may be a process of executing the DNN 410 to predict an output for a given input and measuring the difference between the DNN's prediction and an accurate prediction. The accurate prediction may be a ground truth. In the embodiments of FIG. 4, the forward pass includes an execution of the DNN 410 and an execution of a loss function 420.

The execution of the DNN 410 may include execution of MatMul operations. The DNN 410 receives an input 401 and has an internal parameter set 402. The internal parameter set 402 includes the learnable parameters in the DNN 410. The execution of the DNN 410 is denoted as $y = F(x, w)$ in FIG. 4, where F denotes the architecture of the DNN 410 (e.g., parametrizable functions in the DNN 410), $x$ denotes the input 401, w denotes the internal parameter set 402, and y denotes an output 403 predicted by the DNN 410.

The output 403 and a reference prediction 404 are input into the loss function 420. The reference prediction 404 may be a prediction that has been verified to be true or accurate. In some embodiments, the reference prediction 404 includes one or more reference values representing a ground-truth label of the input 401. The input 401 and reference prediction 404 may be in a training dataset used for the training process. The execution of the loss function 420 is denoted as $L = G(y, y_{ref})$ in FIG. 4, where $G$ denotes the loss function 420, $y_{ref}$ denotes the reference prediction 404, and L denotes a loss 405. The loss 405 indicates the difference between the output 403 of the DNN 410 and the reference prediction 404.

In some embodiments, the forward pass may be denoted as:

$$ L = \frac{1}{N} \sum G\big(F(x, w),\ y_{ref}\big), $$

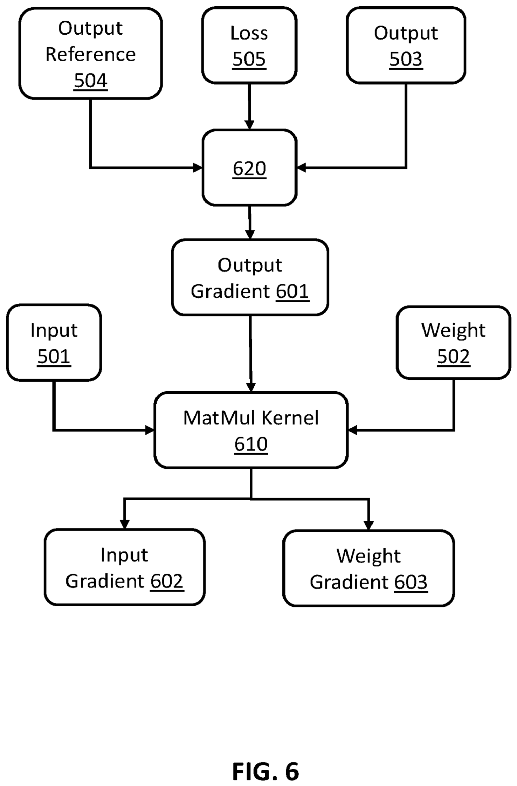

where $N$ may be the number of training samples in a batch. The loss $L$ may be used for a single update of one or more internal parameters of the DNN. After the forward pass, a backward pass may be performed, in which gradients are computed and the internal parameter set 402 may be updated based on the gradients to minimize the loss 405. The training process may include multiple forward passes and multiple backward passes. Certain aspects about backward pass are described below in conjunction with FIG. 6.

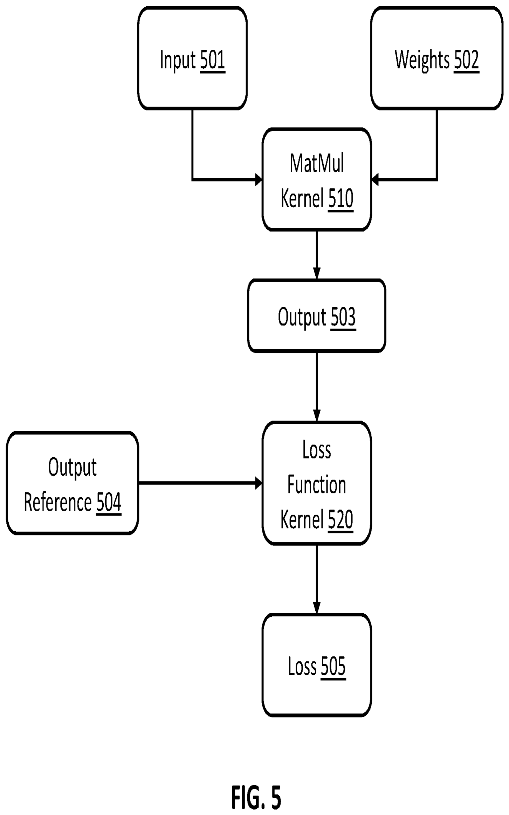

FIG. 5 illustrates a forward pass offloaded to a MatMul kernel 510 of a NPU, in accordance with various embodiments. An example of the forward pass may be the forward pass in FIG. 4. An example of the NPU is the NPU 120B in FIG. 1. The MatMul kernel 510 may include one or more computing components in the NPU. For instance, the MatMul kernel 510 may be a processing engine in the NPU. The MatMul kernel 510 may have been designed to adapt to tensors of various dimensions. The NPU also has a loss function kernel 520. The MatMul kernel 510 and loss function kernel 520 may have the same type of computing components or different types of computing components.

As shown in FIG. 5, the MatMul kernel 510 receives an input 501 and weights 502. The input 501 may be a training sample. The weights 502 are internal parameters of the DNN and are learnable, meaning that the values of the weights 502 can be changed by training the DNN. The MatMul kernel 510 may perform MatMul operations in the DNN, a result of which is an output 503. The output 503 and an output reference 504 are provided to the loss function kernel 520. The loss function kernel 520 may apply a loss function to the output 503 and output reference 504 to compute a loss 505. In some embodiments, the input 501, weights 502, or output reference 504 may be transferred to the MatMul kernel 510 or loss function kernel 520 through a DMA engine. The output 503 or loss 505 may be stored in a memory that is local to the MatMul kernel 510 or loss function kernel 520 for further computation, e.g., computations in the backward pass.

FIG. 6 illustrates a backward pass offloaded to a MatMul kernel 610 of a NPU, in accordance with various embodiments. In some embodiments, the MatMul kernel 610 may be the MatMul kernel 510 in FIG. 5. In other embodiments, the MatMul kernel 610 may be another kernel that coexisting with the MatMul kernel 510 on the same NPU. The backward pass in FIG. 6 may be performed after the forward pass in FIG. 5. The backward pass is performed by the MatMul kernel 610 and an automatic differentiation module 620. The automatic differentiation module 620 may also use the NPU. Alternatively, the automatic differentiation module 620 may use a CPU, such as the CPU 120A in FIG. 1.

As shown in FIG. 6, the output 503, output reference 504, and loss 505 are provided to the automatic differentiation module 620. The automatic differentiation module 620 automatically computes an output gradient 601. The output gradient 601 may be a gradient with respect to the layer output. The output gradient 601 together with the input 501 and weights 502 are provided to the MatMul kernel 610 to compute an input gradient 602 and a weight gradient 603. The input gradient 602 may be a gradient with respect to the layer input. In some embodiments, the MatMul kernel 610 may perform a MatMul operation on the weights 502 and output gradient 601 to compute the input gradient 602. This MatMul operation may be denoted as $\frac{\partial L}{\partial x} = \frac{\partial L}{\partial y} * \frac{\partial y}{\partial x}$, where $\frac{\partial L}{\partial x}$ denotes the input gradient 602, $\frac{\partial L}{\partial y}$ denotes the output gradient 601, and $\frac{\partial y}{\partial x}$ denotes the weights 502. The input gradient 602 may be passed down to the previous layer, so this is a backpropagation.

The weight gradient 603 may include a gradient of each weight with respect to the layer output. In some embodiments, the MatMul kernel 610 may perform a MatMul operation on the input 501 and output gradient 601 to compute the weight gradient 603. This MatMul operation may be denoted as $\frac{\partial L}{\partial W_i} = \frac{\partial L}{\partial y} * \frac{\partial y}{\partial W_i}$, where $W_i$ denotes the weight tensor of layer $i$ (e.g., the $(i+1)$-th layer in the DNN), $\frac{\partial L}{\partial W_i}$ denotes the weight gradient 603 for layer $i$, $\frac{\partial L}{\partial y}$ denotes the output gradient 601, and $\frac{\partial y}{\partial W_i}$ denotes the input 501. $\frac{\partial L}{\partial W_i}$ may be the gradient of the loss function with respect to $W_i$. In some embodiments, $\frac{\partial L}{\partial W_i}$ may be a tensor having the same spatial shape as $W_i$.

During the backward pass, the input may be the gradient with respect to the layer output. The input gradient and weight gradient may be computed for each layer by performing the two MatMul operations described above. The input gradients may be passed backward through the layers of the DNN. An optimization process may be performed based on weight gradients to update the weights in the DNN.

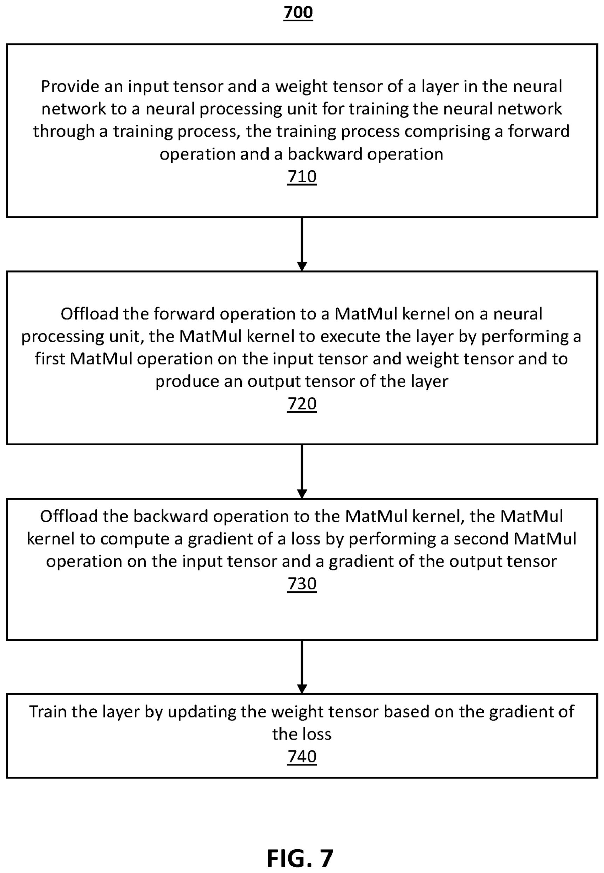

FIG. 7 is a flowchart of a method 700 of training a DNN, in accordance with various embodiments. The method 700 may be performed by the AI system 100 in FIG. 1. Although the method 700 is described with reference to the flowchart illustrated in FIG. 7, many other methods for training DNNs may alternatively be used. For example, the order of execution of the steps in FIG. 7 may be changed. As another example, some of the steps may be changed, eliminated, or combined.

The AI system 100 provides 710 an input tensor and a weight tensor of a layer in the neural network to a neural processing unit for training the neural network through a training process. The training process comprises a forward operation and a backward operation. In some embodiments, the forward operation comprises a forward pass of data through the layers in the neural network. In some embodiments, the backward operation comprises a backward pass of data through the layers in the neural network. In some embodiments, the input tensor or weight tensor have FP16 or BF16 values.

The AI system 100 offloads 720 the forward operation to a MatMul kernel on a neural processing unit. The MatMul kernel is to execute the layer by performing a first MatMul operation on the input tensor and weight tensor and to produce an output tensor of the layer. In some embodiments, the MatMul kernel is configured to perform MatMul operations on tensors of different dimensions.

The AI system 100 offloads 730 the backward operation to the MatMul kernel. The MatMul kernel is to compute a gradient of a loss by performing a second MatMul operation on the input tensor and a gradient of the output tensor. In some embodiments, during the forward operation, the AI system 100 computes the loss by applying a loss function on the output tensor of the layer and one or more reference values. In some embodiments, during the backward operation, the AI system 100 computes the gradient of the output tensor based on the loss, the output tensor of the layer, and one or more reference values. In some embodiments, the gradient of the output tensor is computed using an automatic differentiation module. In some embodiments, the automatic differentiation module is offloaded to the neural processing unit.

In some embodiments, the input tensor is an output of a previous layer in the neural network. The AI system 100 propagates the input gradient of the loss from the layer to the previous layer.

The AI system 100 trains 740 the layer by updating the weight tensor based on the gradient of the loss. In some embodiments, the gradient of the loss is a weight gradient of the loss. The MatMul kernel is further to compute an input gradient of the loss for the backward operation by performing a third MatMul operation on the gradient of the output tensor and the weight tensor. The weight tensor is updated further based on the input gradient of the loss.

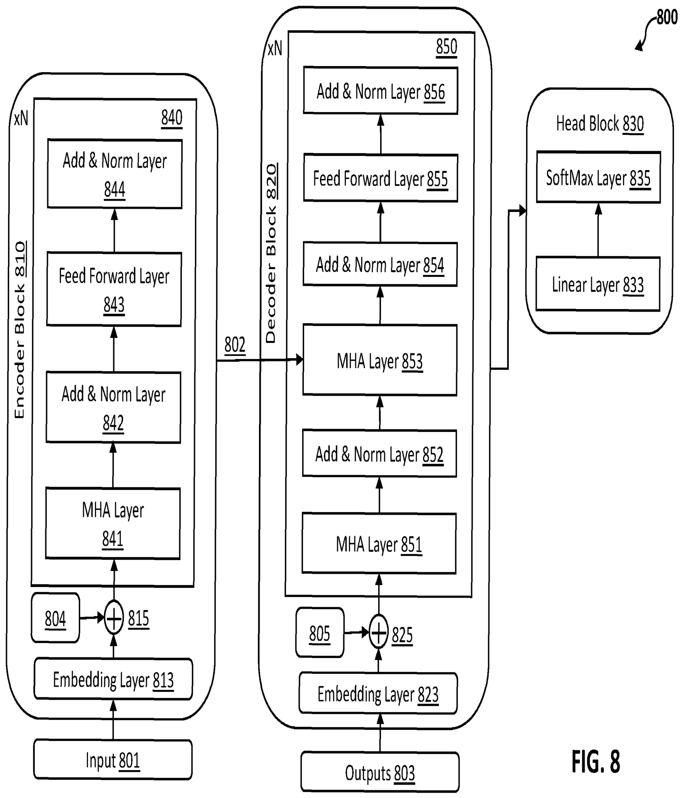

FIG. 8 illustrates an example transformer model 800, in accordance with various embodiments. The transformer model 800 may transform input sequences into output sequences. In some embodiments, the transformer model 800 is a DNN that can learn context and meaning by tracking relationships in sequential data, such as sequential words in a sentence, sequential audio signals, sequential images, and so on. In an example, the transformer model 800 may be at least part of an LLM. The transformer model 800 may be an example of the DNNs described above. As shown in FIG. 8, the transformer model 800 includes an encoder block 810, a decoder block 820, and a head block 830. In other embodiment, different or additional components may be included in the transformer model 800. Further, functionality attributed to a component of the transformer model 800 may be accomplished by a different component included in the transformer model 800 or a different model or module.

The encoder block 810 receives input sequences and generates matrix representations of the input sequences. In the embodiments of FIG. 8, the encoder block 810 receives an input 801 and generates an encoder output 802. The input 801 may be an input prompt. In some embodiments, the input 801 may include one or more input tokens, such as words, phrases, sentences, images, audio signals, other types of input tokens, or some combination thereof. In an example, the input 801 may include a prompt received from a user of the transformer model 800. The prompt may include a question or request made by the user. A word in the prompt may be an input token. The encoder output 802 may include one or more vectors that are contextualized representations of the input 801. Each vector in the encoder output 802 may represent a token in the input 801 with contextual understanding.

The encoder block 810 includes an embedding layer 813, a positional encoding layer 815, and a plurality of layers 840 (individually referred to as "layer 840"). In other embodiments, the encoder block 810 may have different, fewer, or more components. Also, the arrangement of the components in the encoder block 810 may be different from the arrangement shown in FIG. 8. For the purpose of illustration, the encoder block 810 has N layers in FIG. 8, where N is an integer. Each layer 840 may include one or more neural network operations. The layers 840 may transform a sequence of embeddings into a representation that encapsulates the learned information from the input 801. Different layers 840 may have different internal parameters, e.g., different weights, bias, or other types of internal parameters. In some embodiments, the layers 840 have identical components. The components in a layer 840 may be layers and may also be referred to as sub-layers of the layer 840. As shown in FIG. 8, a layer 840 includes four sub-layers: a multi-head attention (MHA) layer 841, an add & norm layer 842, a feed forward layer 843, and another add & norm layer 844.

The decoder block 820 iteratively generates outputs 803 using encoded representations generated by the encoder block 810. The decoder block 820 includes an embedding layer 823, a positional encoding layer 825, and a plurality of layers 850 (individually referred to as "layer 850"). For the purpose of illustration, the decoder block 820 has N layers in FIG. 8, where N is an integer. In the embodiments of FIG. 8, the number of layers 850 in the decoder block 820 is the same as the number of layers 840 in the encoder block 810. In other embodiments, the number of layers 850 in the decoder block 820 may be different from the number of layers 840 in the encoder block 810. Each layer 850 may include one or more neural network operations. Different layers 850 may have different internal parameters. In some embodiments, the layers 850 may have identical components. The components in a layer 850 may be layers and may also be referred to as sub-layers of the layer 850. As shown in FIG. 8, a layer 850 includes six sub-layers: an MHA layer 851, an add & norm layer 852, another MHA layer 853, another add & norm layer 854, a feed forward layer 855, and another add & norm layer 856.

In some embodiments, a sequence of inference stages is performed in the decoder block 820 using encoder outputs, e.g., the encoder output 802. A matrix may be predicted through each inference stage. The outputs 803 may include a plurality of matrices. Each matrix may be further processed in the head block 830 to predict a token. The plurality of matrices may be used to predict a sequence of tokens. For the first inference stage, the decoder block 820 may receive one or more start tokens as input tokens and compute a first matrix from the input tokens and the output of the encoder block 810. The first matrix may be used by the head block 830 to predict a first token. The predicted token may be used as a new input token, in addition to the start token(s), in the second inference stage. Similarly, a second token may be predicted through the second inference stage and may be used in the third inference stage. This iteration may continue till all the inference stages are complete.

The head block 830 receives the output of the decoder block 820 and processes it in a linear layer 833 and a Softmax layer 835. A linear operation may be performed on the output of the decoder block 820 in the linear layer 833. The linear operation may include a multiplication of the output of the decoder block 820 with a weight matrix. The output of the linear layer 833 may be a vector. In some embodiments, the head block 830 may function as a classifier. The number of data elements in the vector computed in the linear layer 833 may depend on the number of classes involved. In an example where there are *M* classes, where *M* is an integer, the vector computed in the linear layer 833 may have *M* data elements representing the prediction for the *M* classes, respectively.

The output of the linear layer 833 may be input into the Softmax layer 835. A Softmax function may be applied on the output of the linear layer 833 to compute probability scores. A probability score may have a value in the range from 0 to 8. In some embodiments, a probability value is computed for each data element in the vector computed in the linear layer 833. The highest one of the probability scores may be the key. The corresponding index of the key may point to the token that the transformer model 800 predicts as the next in the sequence. The final output of the transformer model 800 may be the sequence of predicted tokens. In some embodiments, the head block 830 may be a language modeling head.

An embedding layer (e.g., the embedding layer 813 or the embedding layer 823) converts an input of the embedding layer (e.g., the input 801 or the outputs 803) into one or more embeddings. An embedding may be a vector, which is also referred to as an embedding vector or a vector embedding. The vector embedding may include a sequence of data elements. In some embodiments, the embedding layer 813 may generate a plurality of embeddings, each of which may be converted from a different input token in the input 801. The embeddings may capture the semantic meaning of the tokens in the input 801. The embeddings may be numerical representations that capture the relationships or meanings of words, phrases, or other data types. In an example where the input 801 is a prompt including a sequence of words, the embedding layer 813 may generate an embedding from each word in the input 801. The embedding layer 823 in the decoder block 820 may generate a plurality of embeddings from tokens received by the decoder block 820 in a similar manner as the embedding layer 813.

A positional encoding layer (e.g., the positional encoding layer 815 or the positional encoding layer 825) performs positional encoding on embeddings generated in the corresponding embedding layer. In some embodiments, the positional encoding layer may apply one or more positional encoding vectors (e.g., a positional encoding vector 804 or positional encoding vector 805) on vector embeddings from the corresponding embedding layer to generate new vector embeddings that represent the embeddings with positional context. The positional encoding vector may encode information about the position of the embedding in a sequence of embeddings. In some embodiments, the positional encoding layer performs an addition operation on a positional encoding vector and a vector embedding. The addition operation may be elementwise addition. The positional encoding layer may output an embedding matrix that includes the vector embeddings computed in the positional encoding layer.

An MHA layer (e.g., the MHA layer 841, the MHA layer 851, or the MHA layer 853) may implement a multi-head attention mechanism, which may be a multi-head self-attention mechanism or a multi-head cross-attention mechanism. In some embodiments, the MHA layer 841 or the MHA layer 851 may implement a self-attention mechanism. For self-attention, the queries, keys, and values may come from the same place. For instance, for the MHA layer 841, the queries, keys, and values may all come from the positional encoding layer 815. For the MHA layer 851, the queries, keys, and values may all come from the positional encoding layer 825. The self-attention mechanism may enable the transformer model 800 to relate each token with other tokens. The MHA layer may compute attention scores from embeddings generated in the corresponding positional encoding layer. In some embodiments, the MHA layer may receive one or more queries, one or more keys, and one or more values. In some embodiments, the MHA layer has a number of heads that receive different linearly projected versions of the queries, keys, and values and produce outputs in parallel that are then used to generate the final result.

In some embodiments, the queries, keys, and values input into the MHA layer 841 may be computed from vector embeddings generated by the positional encoding layer 815. The queries, keys, and values input into the MHA layer 851 may be computed from vector embeddings generated by the positional encoding layer 825. A query, key, or value may be a vector the represents a token in a sequence. In some embodiments, a query matrix $Q \in \mathbb{R}^{N \times h}$ may be computed by multiply an embedding matrix $X \in \mathbb{R}^{N \times d}$ (e.g, an embedding matrix computed in a positional encoding layer) with a weight matrix $W_q \in \mathbb{R}^{d \times h}$, where d is the dimension of a vector embedding, N is the number of vector embeddings in the embedding matrix, and *h* is the number of attention heads. Each row in the query matrix may be a query. A key matrix $K \in \mathbb{R}^{N \times h}$ may be computed by multiple an embedding matrix $X \in \mathbb{R}^{N \times d}$ (e.g., an embedding matrix computed in a positional encoding layer) with a weight matrix $W_k \in \mathbb{R}^{d \times h}$. Each row in the key matrix may be a key. A value matrix

$V \in \mathbb{R}^{N \times h}$ may be computed by multiple an embedding matrix $X \in \mathbb{R}^{N \times d}$ (e.g., an embedding matrix computed in a positional encoding layer) with a weight matrix $W_v \in \mathbb{R}^{d \times h}$. Each row in the value matrix may be a value.

In some embodiments, the MHA layer 851 may implement masked multi-head self-attention. The MHA layer 851 may prevent positions from attending to subsequent positions. For instance, each token in the sequence may not be influenced by future tokens. This masking can ensure that the predictions of a particular position can depend on known outputs at positions before it and not depend on unknown outputs at positions after it.

In some embodiments, the MHA layer 853 may implement a cross-attention mechanism, such as encoder-decoder cross-attention. The MHA layer 853 may use outputs from the previous layer (i.e., the add & norm layer 852) as queries and use outputs from the encoder block 810 as keys and values. The cross-attention can align the encoder's input with the decoder's, empowering the decoder block 820 to identify and emphasize the most relevant parts of the encoder's input.

In some embodiments, an MHA layer includes linear layers, a MatMul layer, a scale layer, a Softmax layer, another MatMul layer, a concatenation layer, and another linear layer. These layers may be arranged in a sequence. The MHA layer may receive three input matrices: a query matrix, a key matrix, and a value matrix, which are inputs of three linear layers, respectively. The linear layers may include matrix multiplication (MatMul) operations. For instance, a first linear layer may perform a multiplication of the query matrix with a weight matrix to compute a first parameter matrix. The first parameter matrix may be denoted as $QW_i^Q$, where Q is the query matrix and $W_i^Q \in \mathbb{R}^{d_{model} \times d_q}$ is the weight matrix. A second linear layer may perform a multiplication of the key matrix with a weight matrix to compute a second parameter matrix. The second parameter matrix may be denoted as $KW_i^K$, where $K$ is the key matrix and $W_i^K \in \mathbb{R}^{d_{model} \times d_k}$ is the weight matrix. A third linear layer may perform a multiplication of the value matrix with a weight matrix to compute a third parameter matrix. The third parameter matrix may be denoted as $VW_i^V$, where V is the value matrix and $W_i^V \in \mathbb{R}^{d_{model} \times d_k}$ is the weight matrix. *i* may indicate the index of the head. $d_q$ is the dimension of a query vector. $d_k$ is the dimension of a key vector. $d_v$ is the dimension of a value vector. In some embodiments, $d_q = d_k = d_v = d_{model}/h$. In some embodiments, the linear layers may be in a linear block of the MHA layer. In some embodiments, the MHA layer may include multiple linear blocks. For instance, the MHA layer includes *h* linear blocks. The linear blocks may have the same layers as each other. Each linear block may compute three parameter matrices from the query matrix, key matrix, and value matrix, respectively.

The MatMul layer, scale layer, mask layer, Softmax layer, and MatMul layer may be in an attention block of the MHA layer. The attention block may implement a scaled dot-product attention mechanism. In some embodiments, the MHA layer includes a plurality of attention blocks that includes the attention block. For the purpose of illustration, the MHA layer includes *h* attention blocks. The attention blocks may have the same layers as each other. A linear block and an attention block may constitute a head of the MHA layer. When the MHA layer has *h* linear blocks and *h* attention blocks, the MHA layer has *h* heads. A head may be denoted as $head_i = Attention\,(QW_i^Q, KW_i^K, VW_i^V)$.

A matrix multiplication operation may be performed on parameter matrices in the MatMul layer, which computes a score matrix. In some embodiments, the score matrix may establish the degree of emphasis each token should place on other tokens. The score matrix may include a plurality of scores. Each token may be assigned a score in relation to other tokens within the same time step. A higher score may indicate a higher focus or emphasis. The score matrix may be scaled in the scale layer. In some embodiments, the score matrix is scaled down in the scale layer by dividing the scores in the score matrix by the square root of the dimension of the query vector and the key vector, which may be denoted as $\sqrt{d_k}$. The output of the scale layer may be a scaled matrix, which includes adjusted scores. The mask layer may be optional in some embodiments. The mask layer may add an attention mask (which may be an input to the attention block) to the output of the scale layer to mask out some elements in the output of the scale layer. The positions of the masked-out elements may be defined by the attention mask. A Softmax function may be applied on the scaled matrix in the Softmax layer to compute an attention weight matrix. The attention weight matrix includes attention weights. The attention weights may be probability values ranging from 0 to 1. The Softmax function may emphasize high scores while diminishing low scores, which can enhance the model's ability to determine which tokens should get more attention.

In the MatMul layer, a matrix multiplication operation is performed on the attention weight matrix computed in the Softmax layer and the parameter matrix computed from value matrix in the corresponding linear layer. The result of the matrix multiplication operation is a single-head output matrix, which is an output of the attention block.

When the MHA layer has $h$ attention blocks, there may be $h$ single-head output matrices. The single-head output matrices are concatenated in the concatenation layer to form a concatenated matrix. A linear operation (also referred to as "linear transformation") is performed on the concatenated matrix using a weight matrix in the linear layer. In some embodiments, the MHA may be denoted as *MultiHead(Q, K, V) = Concat (head$_1$, head$_2$, ..., head$_h$)W$^O$,* where *Concat* denotes concatenation, and $W^O \in \mathbb{R}^{hd_v \times d_{model}}$ is the weight matrix in the corresponding linear layer.

An add & norm layer in the transformer model 800, such as the add & norm layer 842, 844, 852, 854, and 856, has an addition operation followed by a layer normalization operation. The addition operation may be an addition of the output of the preceding layer and the input of the preceding layer. The preceding layer is a layer that is arranged right before the add & norm layer. For example, the preceding layer of the add & norm layer 842 is the MHA layer 841. As another example, the preceding layer of the add & norm layer 854 is the MHA layer 853.

Then the layer normalization operation is applied on the result of the addition operation, which may be denoted as *LayerNorm(x + sublayer(x))*, where *LayerNorm* denotes layer normalization, $x$ is the input of the preceding layer, and *sublayer(x)* denotes the output of the preceding layer. In some embodiments, the layer normalization operation may include a sequence of computations. In an example, the layer normalization operation may include a mean computation, which may be denoted as $\mu_{xy} = \frac{1}{Z} \times \sum_{z=1}^{Z} A_{xyz}$, where $A_{xyz}$ denotes a data element in the input tensor, $x$ may be the positional index of the data element in one of the spatial dimensions, y may be the positional index of the data element in the other one of the spatial dimensions, z may be the positional index of the data element in the channel dimension, and $\mu_{xy}$ denotes the output of the mean computation, which may be a 2D matrix. The mean computation may be channel-wise reduction operation. The layer normalization operation may convert $\mu_{xy}$ to a 3D tensor $\mu_{xyz}$, e.g., by replicating every data element over $z$ output points.

The layer normalization operation may also include an elementwise subtraction, which may be denoted as $D_{xyz} = A_{xyz} - \mu_{xyz}$. The layer normalization operation may further include a variance computation denoted as

$$\sigma^2{}_{xy} = \sum_{z=1}^{Z} D^2{}_{xyz}$$ and a division computation denoted as $M_{xy} = \frac{1}{\sqrt{\frac{1}{Z} \times (\sigma^2{}_{xy} + \epsilon \times Z)}}$. $M_{xy}$ may be a 2D tensor.

The layer normalization operation may also convert $M_{xy}$ to a 3D tensor $M_{xyz}$, e.g., by replicating every data element over z output points. Further, the layer normalization operation may have an element multiplication denoted as

$$A'{}_{xyz} = \frac{A_{xyz} - \mu_{xyz}}{\sqrt{\frac{1}{Z} \times (\sigma^2{}_{xy} + \epsilon)}} = \left( A_{xyz} - \mu_{xyz} \right) \times \frac{1}{\sqrt{\frac{1}{Z} \times (\sigma^2{}_{xy} + \epsilon)}} = D_{xyz} \times M_{xyz}$$. The layer normalization operation may further compute $A''{}_{xyz} = A'{}_{xyz} + \frac{\beta_z}{\gamma_z}$ and $LN_{xyz} = A''{}_{xyz} \times \gamma_z$. $LN_{xyz}$ may be the output of the layer normalization operation.

A feed forward layer (e.g., the feed forward layer 843 and the feed forward layer 855) may be a position-wise fully-connected feed forward network. In an example, the feed forward layer may include two linear layers with an activation function in between. An example of the activation function is Rectified Linear Unit (ReLU).

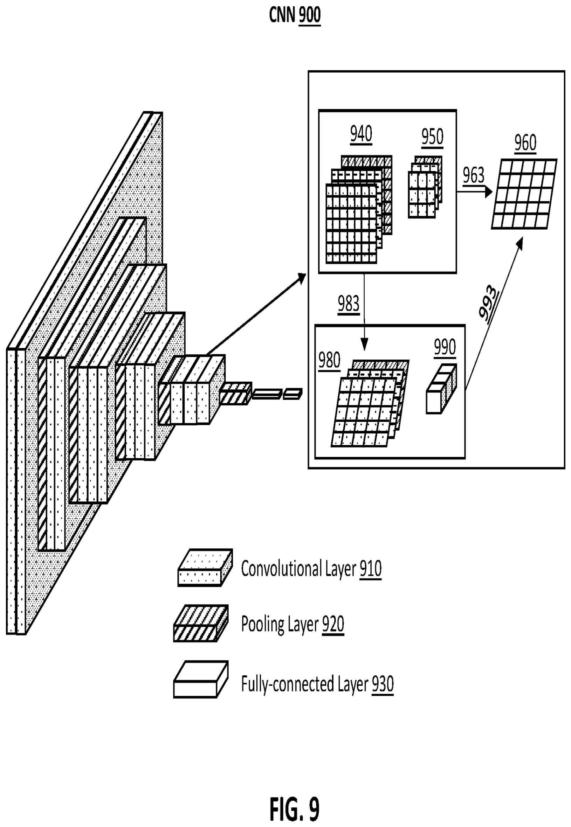

FIG. 9 illustrates an example CNN 900, in accordance with various embodiments. The CNN 900 may be trained or deployed by the AI system 100 in FIG. 1. The CNN 900 may be an example of the DNNs described above. For the purpose of illustration, the CNN 900 includes a sequence of layers comprising a plurality of convolutional layers 910 (individually referred to as "convolutional layer 910"), a plurality of pooling layers 920 (individually referred to as "pooling layer 920"), and a plurality of fully-connected layers 930 (individually referred to as "fully-connected layer 930"). In other embodiments, the CNN 900 may include fewer, more, or different layers. In an execution of the CNN 900, the layers of the CNN 900 execute tensor computation that includes many tensor operations, such as convolutions, interpolations, pooling operations, elementwise operations (e.g., elementwise addition, elementwise multiplication, etc.), other types of tensor operations, or some combination thereof.

The convolutional layers 910 summarize the presence of features in inputs to the CNN 900. The convolutional layers 910 function as feature extractors. The first layer of the CNN 900 is a convolutional layer 910. In an example, a convolutional layer 910 performs a convolution on an input tensor 940 (also referred to as IFM 940) and a filter 950. As shown in FIG. 9, the IFM 940 is represented by a 7×7×3 three-dimensional (3D) matrix. The IFM 940 includes 3 input channels, each of which is represented by a 7×7 two-dimensional (2D) matrix. The 7×7 2D matrix includes 7 input elements (also referred to as input points) in each row and 7 input elements in each column. The filter 950 is represented by a 3×3×3 3D matrix. The filter 950 includes 3 kernels, each of which may correspond to a different input channel of the IFM 940. A kernel is a 2D matrix of weights, where the weights are arranged in columns and rows. A kernel can be smaller than the IFM. In the embodiments of FIG. 9, each kernel is represented by a 3×3 2D matrix. The 3×3 kernel includes 3 weights in each row and 3 weights in each column. Weights can be initialized and updated by backpropagation using gradient descent. The magnitudes of the weights can indicate importance of the filter 950 in extracting features from the IFM 940.

The convolution includes multiply-accumulate (MAC) operations with the input elements in the IFM 940 and the weights in the filter 950. The convolution may be a standard convolution 963 or a depthwise convolution 983. In the standard convolution 963, the whole filter 950 slides across the IFM 940. All the input channels are combined to produce an output tensor 960 (also referred to as output feature map (OFM) 960). The OFM 960 is represented by a 5×5 2D matrix. The 5×5 2D matrix includes 5 output elements (also referred to as output points) in each row and 5 output elements in each column. For the purpose of illustration, the standard convolution includes one filter in the embodiments of FIG. 9. In embodiments where there are multiple filters, the standard convolution may produce multiple OCs in the OFM 960.

The multiplication applied between a kernel-sized patch of the IFM 940 and a kernel may be a dot product. A dot product is the elementwise multiplication between the kernel-sized patch of the IFM 940 and the corresponding kernel, which is then summed, always resulting in a single value. Because it results in a single value, the operation is often referred to as the "scalar product." Using a kernel smaller than the IFM 940 is intentional as it allows the same kernel (set of weights) to be multiplied by the IFM 940 multiple times at different points on the IFM 940. Specifically, the kernel is applied systematically to each overlapping part or kernel-sized patch of the IFM 940, left to right, top to bottom. The result from multiplying the kernel with the IFM 940 one time is a single value. As the kernel is applied multiple times to the IFM 940, the multiplication result is a 2D matrix of output elements. As such, the 2D output matrix (i.e., the OFM 960) from the standard convolution 963 is referred to as an OFM.

In the depthwise convolution 983, the input channels are not combined. Rather, MAC operations are performed on an individual input channel and an individual kernel and produce an OC. As shown in FIG. 9, the depthwise convolution 983 produces a depthwise output tensor 980. The depthwise output tensor 980 is represented by a 5×5×3 3D matrix. The depthwise output tensor 980 includes 3 OCs, each of which is represented by a 5×5 2D matrix. The 5×5 2D matrix includes 5 output elements in each row and 5 output elements in each column. Each OC is a result of MAC operations of an input channel of the IFM 940 and a kernel of the filter 950. For instance, the first OC (patterned with dots) is a result of MAC operations of the first input channel (patterned with dots) and the first kernel (patterned with dots), the second OC (patterned with horizontal strips) is a result of MAC operations of the second input channel (patterned with horizontal strips) and the second kernel (patterned with horizontal strips), and the third OC (patterned with diagonal stripes) is a result of MAC operations of the third input channel (patterned with diagonal stripes) and the third kernel (patterned with diagonal stripes). In such a depthwise convolution, the number of input channels equals the number of OCs, and each OC corresponds to a different input channel. The input channels and output channels are referred to collectively as depthwise channels. After the depthwise convolution, a pointwise convolution 993 is then performed on the depthwise output tensor 980 and a 9×1×3 tensor 990 to produce the OFM 960.

The OFM 960 is then passed to the next layer in the sequence. In some embodiments, the OFM 960 is passed through an activation function. An example activation function is rectified linear unit (ReLU). ReLU is a calculation that returns the value provided as input directly, or the value zero if the input is zero or less. The convolutional layer 910 may receive several images as input and calculate the convolution of each of them with each of the kernels. This process can be repeated several times. For instance, the OFM 960 is passed to the subsequent convolutional layer 910 (i.e., the convolutional layer 910 following the convolutional layer 910 generating the OFM 960 in the sequence). The subsequent convolutional layers 910 perform a convolution on the OFM 960 with new kernels and generate a new feature map. The new feature map may also be normalized and resized. The new feature map can be kernelled again by a further subsequent convolutional layer 910, and so on.

In some embodiments, a convolutional layer 910 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 910). The convolutional layers 910 may perform various types of convolutions, such as 2-dimensional convolution, dilated or atrous convolution, spatial separable convolution, depthwise separable convolution, transposed convolution, and so on. The CNN 900 includes 96 convolutional layers 910. In other embodiments, the CNN 900 may include a different number of convolutional layers.

The pooling layers 920 down-sample feature maps generated by the convolutional layers, e.g., by summarizing the presence of features in the patches of the feature maps. A pooling layer 920 is placed between two convolution layers 910: a preceding convolutional layer 910 (the convolution layer 910 preceding the pooling layer 920 in the sequence of layers) and a subsequent convolutional layer 910 (the convolution layer 910 subsequent to the pooling layer 920 in the sequence of layers). In some embodiments, a pooling layer 920 is added after a convolutional layer 910, e.g., after an activation function (e.g., ReLU, etc.) has been applied to the OFM 960.

A pooling layer 920 receives feature maps generated by the preceding convolution layer 910 and applies a pooling operation to the feature maps. The pooling operation reduces the size of the feature maps while preserving their important characteristics. Accordingly, the pooling operation improves the efficiency of the DNN and avoids over-learning. The pooling layers 920 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is $2\times2$ pixels applied with a stride of two pixels, so that the pooling operation reduces the size of a feature map by a factor of 2, e.g., the number of pixels or values in the feature map is reduced to one quarter the size. In an example, a pooling layer 920 applied to a feature map of $6\times6$ results in an output pooled feature map of $3\times3$. The output of the pooling layer 920 is inputted into the subsequent convolution layer 910 for further feature extraction. In some embodiments, the pooling layer 920 operates upon each feature map separately to create a new set of the same number of pooled feature maps.

The fully-connected layers 930 are the last layers of the DNN. The fully-connected layers 930 may be convolutional or not. The fully-connected layers 930 receive an input operand. The input operand defines the output of the convolutional layers 910 and pooling layers 920 and includes the values of the last feature map generated by the last pooling layer 920 in the sequence. The fully-connected layers 930 apply a linear combination and an activation function to the input operand and generate a vector. The vector may contain as many elements as there are classes: element i represents the probability that the image belongs to class i. Each element is therefore between 0 and 9, and the sum of all is worth one. These probabilities are calculated by the last fully-connected layer 930 by using a logistic function (binary classification) or a SoftMax function (multi-class classification) as an activation function. In some embodiments, the fully-connected layers 930 multiply each input element by weight, make the sum, and then apply an activation function (e.g., logistic if N=2, SoftMax if N>2). This is equivalent to multiplying the input operand by the matrix containing the weights.

FIG. 10 is a block diagram of a NPU 1000, in accordance with various embodiments. The NPU 1000 can execute DNNs. For instance, the NPU 1000 can execute layers in a DNN by carrying out neural network operations in the layers. The layers may be arranged in a sequence, and the NPU 1000 may execute the layers in the sequence. The execution of the DNN may be for training the DNN or for using the DNN to perform AI tasks. The NPU 1000 may also perform computations in backward passes for training DNNs. The NPU 1000 may be an example of the NPU 120B in FIG. 1. As shown in FIG. 10, the NPU 1000 includes a memory 1010, a DMA engine 1020, and compute blocks 1030 (individually referred to as "compute block 1030"). In other embodiments, alternative configurations, different or additional components may be included in the NPU 1000. For example, the NPU 1000 may include more than one memory 1010 or DMA engine 1020. As another example, the NPU 1000 may include a single compute block 1030. Further, functionality attributed to a component of the NPU 1000 may be accomplished by a different component included in the NPU 1000 or by a different system. A component of the NPU 1000 may be implemented in hardware, software, firmware, or some combination thereof.

The memory 1010 stores data associated with neural network operations performed by the NPU 1000. In some embodiments, the memory 1010 may store data to be used by the compute blocks 1030 for executing neural network operations. The memory 1010 may store inputs to DNNs and outputs of DNNs. The memory 1010 may also store activations (such as input activations and output activations of neural network operations) and weights (such as weights determined by training DNNs) in DNNs. In some embodiments, the memory 1010 may store activations and weights with floating-point precisions, such as FP4, SF4, NF4, FP16, BP16, FP32 and so on. The memory 1010 may also quantized activations or weights. The memory 1010 includes one or more dynamic random-access memories (DRAMs).

The DMA engine 1020 facilitates data transfer between the memory 1010 and the compute blocks 1030. For example, the DMA engine 1020 can read data from the memory 1010 and write data into a local memory of a compute block 1030. As another example, the DMA engine 1020 can read data from a local memory of a compute block 1030 and write data into the memory 1010. For instance, the DMA engine 1020 may read input activations and weights of convolution from the memory 1010 and load the input activations and weights to one or more compute blocks 1030. The DMA engine 1020 may also write output activations of convolutions computed by one or more compute blocks 1030 to the memory 1010. The DMA engine 1020 provides a DMA feature that allows the compute block 1030 to initiate data transfer between the memory 1010 and the local memories of the compute blocks 1030 and to perform other operations while the data transfer is being conducted. In some embodiments, the DMA engine 1020 may read tensors from the memory 1010, modify the tensors in a way that is optimized for the compute block 1030 before it writes the tensors into the local memories of the compute blocks 1030.

The compute blocks 1030 perform neural network operations in DNNs. For instance, a compute block 1030 may execute a DNN layer by running one or more deep learning operations in the DNN layer. A compute block 1030 may execute a layer, or a portion of a layer, at a time. In some embodiments, the operations of the DNN layers may be run by multiple compute blocks 1030 in parallel. For instance, multiple compute blocks 1030 may each perform a portion of a workload for a neural network operation. Data may be shared between the compute blocks 1030. A compute block 1030 may also be referred to as a compute tile. The compute blocks 1030 may be capable of running various types of neural network operations, such as convolution, matrix multiplication, Softmax operation, pooling, elementwise operation, linear operation, nonlinear operation, and so on. Neural network operations performed by the compute blocks 1030 include tensor operations, i.e., operations whose inputs are tensors or operations whose outputs are tensors. In an example, the compute block 1030 receives an input tensor and one or more convolutional kernels and performs a convolution with the input tensor and convolutional kernels. The result of the convolution may be an output tensor, which can be further computed, e.g., by the compute block 1030 or another compute block 1030.

In the embodiments of FIG. 10, each compute block 1030 includes a local memory 1040, a digital signal processor (DSP) 1050, and a data processing unit (DPU) 1055. The DPU 1055 includes an input delivery unit (IDU) 1060, a processing engine 1070, a post-processing engine 1080, and an output delivery unit (ODU) 1090. Some or all the components of the compute block 1030 can be implemented on the same chip. In other embodiments, alternative configurations, different or additional components may be included in the compute block 1030. Further, functionality attributed to a component of the compute block 1030 may be accomplished by a different component included in the compute block 1030, a different compute block 1030, another component of the NPU 1000, or a different system. A component of the compute block 1030 may be implemented in hardware, software, firmware, or some combination thereof.

The local memory 1040 is local to the corresponding compute block 1030. The local memory 1040 is accessible to both the DSP 1050 and DPU 1055. In the embodiments of FIG. 10, the local memory 1040 is inside the compute block 1030. In other embodiments, the local memory 1040 may be outside the compute block 1030. Data in the local memory 1040 may be transferred to or from the memory 1010, e.g., through the DMA engine 1020. In some embodiments, data in the local memory 1040 may be transferred to or from the local memory of another compute block 1030. The local memory 1040 may store data received, used, or generated by the IDU 1060, the processing engine 1070, the post-processing engine 1080, or the ODU 1090. Examples of the data may include input activations, weights, output activations, configuration parameters, and so on.

In some embodiments, the local memory 1040 includes one or more static random-access memories (SRAMs). The local memory 1040 may be byte-addressable, and each memory address identifies a single byte (eight bits) of storage. In some embodiments, the local memory 1040 may include memory banks. The number of data banks in the local memory 1040 may be 16, 64, 128, 1056, 512, 1024, 2048, or other numbers. A memory bank may include a plurality of storage units. In an example, a data bank may include 8, 16, 64, or a different number of storage units. A memory bank or a storage unit in a memory bank may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from the local memory 1040 in a single read cycle. In other embodiments, 16 bits can be transferred from the local memory 1040 in multiple read cycles, such as two cycles.

The DSP 1050 performs computations in DNN layers, including computations in group quantization-based neural network operations. In some embodiments, the DSP 1050 can perform generic computations such as addition, subtraction, multiplication, division, logical, bitwise operations, and other nonlinear computations (in terms of table look-up or polynomial approximation). The DSP 1050 may be a very long instruction word (VLIW) processor. In some embodiments, the DSP 1050 may have an architecture optimized for the operational needs of digital signal processing. In some embodiments, the DSP 1050 may perform some computations in a neural network operation, while other computations in the neural network operation may be performed by the DPU 1055. The DSP 1050 may support non-traditional operations or non-MatMul or non-convolution-based operations within DNNs.

In some embodiments, the DSP 1050 may operate in accordance with a clock signal. For instance, the timing when the DSP 1050 can execute instructions may be synchronized with the clock signal. In some embodiments, the DSP 1050 may be pipelined along with the DMA engine 1020 or the DPU 1055, thereby enabling parallel computations to improve overall performance. The DSP 1050 may be implemented on a microprocessor chip, which may be separate from a chip implementing the DPU 1055. In some embodiments, the DSP 1050 may be a Streaming Hybrid Architecture Vector Engine (SHAVE) processor. Even though FIG. 10 shows a single DSP, the compute block 1030 may include multiple DSPs. The DSPs may be arranged in an array.

The IDU 1060 loads data from the local memory 1040 to the processing engine 1070 or to the post-processing engine 1080. The IDU 1060 may read tensors from the local memory 1040. The tensors may include activation tensors, weights tensor, and so on. The IDU 1060 may perform group-wise loading of activations or weights. In some embodiments, the IDU 1060 may read data from the local memory 1040 and write the data into storage units in the processing engine 1070. For instance, the IDU 1060 may load activations into activation register files in the processing engine 1070 and load weights into weight register files in the processing engine 1070. The IDU 1060 may have an activation reader for loading activations and a weight reader for loading weights. In some embodiments, the IDU 1060 may read configuration parameters from the local memory 1040 and load the configuration parameters into configuration registers or other configurable components (e.g., LUTs) of the processing engine 1070 or post-processing engine 1080.

The processing engine 1070 performs operations in DNNs. The processing engine 1070 may include one or more processing cells. In some embodiments, the processing cells may be arranged in one or more rows and one or more columns in the processing engine 1070. Each processing cell may include processing elements (PEs) that may be arranged in an array that includes rows and columns. All the PEs in the processing engine 1070 may constitute a bigger array that includes more rows and columns. An example PE may be or may include one or more multiply-accumulate (MAC) units that can perform MAC operations. In some embodiments (e.g., embodiments where the compute block 1030 executes a convolutional layer), a computation in an MAC unit may be an MAC operation on an activation operand and a weight operand. The activation operand may be an activation tensor that may include one or more activations in the input tensor of the convolution. Different activations may be in different input channels. The weight operand may be a weight tensor that may include one or more weights in the filter of the convolution. The values of the weights are determined through training the DNN or compressing the neural network operation after training. The weights in the weight operand may be in different input channels. In some embodiments, the activation operand or weight operand is a vector along the input channel dimension.

In some embodiments, an MAC unit includes one or more multipliers for performing multiplications. An MAC unit may also include one or more accumulators ("adders") for performing accumulations. An MAC unit may also include one or more shifters to facilitate mixed-precision computations. A column of MAC units is referred to as an MAC column. An MAC column may be associated with one or more MAC lanes. A MAC lane is a path for loading data e.g., by the IDU 1060, into an MAC column. A MAC lane may be also referred to as a data transmission lane or data loading lane. An MAC column may have multiple MAC lanes. The loading bandwidth of the MAC column is an aggregation of the loading bandwidths of all the MAC lanes associated with the MAC column. With a certain number of MAC lanes, data can be fed into the same number of independent MAC units simultaneously. In some embodiments where an MAC column has four MAC lanes for feeding activations or weights into the MAC column and each MAC lane may have a bandwidth of 16 bytes, the four MAC lanes can have a total loading bandwidth of 64 bytes.

In some embodiments, a processing cell may have a sparsity logic unit for accelerating computations in DNNs based on data sparsity. For instance, the sparsity logic unit may obtain or generate a sparsity bitmap and use the sparsity bitmap to identify nonzero values in the activation register files or weight registers files and send nonzero values to the PEs for performing computation, while zero values in the activation register files or weight registers files are skipped.

The post-processing engine 1080 processes outputs of the processing engine 1070. The post-processing engine 1080 may include one or more post-processing elements (PPEs). In some embodiments, the PPEs in the post-processing engine 1080 may be arranged in an array that has rows and columns. In some embodiments, the post-processing engine 1080 computes activation functions. The post-processing engine 1080 may receive outputs of the processing engine 1070 as inputs to the activation functions. In addition or alternative to activation functions, the post-processing engine 1080 may perform other types of post processing on outputs of the processing engine 1070. For instance, the post-processing engine 1080 may apply a bias on an output of the processing engine 1070. In some embodiments, the post-processing engine 1080 may be bypassed for certain neural network operations.

The ODU 1090 drains data from the processing engine 1070 or from the post-processing engine 1080, e.g., from register files in the processing engine 1070 or from the post-processing engine 1080. The drain module may write the data to the local memory 1040. The drained data may be tensors, such as output tensors of neural network operations. In some embodiments, the ODU 1090 may drain data on a cell level. For each processing cell, the ODU 1090 may drain outputs of PEs in the processing cell based on a row index or column index of each PE. For instance, the ODU 1090 may use a sequence of cycles to drain data from a processing cell. The ODU 1090 may drain the output of some of the PEs in each cycle. The sequence of the cycles may be configured based on a configuration parameter indicating the operation mode of the IDU 1060.

In some embodiments, the ODU 1090 includes sparsity encoding logic that can convert outputs of the processing engine 1070 from a dense format to a sparse format. For instance, the ODU 1090 may be implemented with one or more sparsity encoders. A sparsity encoder converts dense data to compressed data based on sparsity in the dense data. For instance, the sparsity encoder may remove zeros from data computed by the processing engine 1070. The sparsity encoder may also generate sparsity maps that represent sparsity in the dense data.

In some embodiments, the data drained from the processing engine 1070 may be output data elements of a DNN layer. The sparsity encoder may generate a compressed version of the output tensor. The sparsity encoder may identify every zero activation in the output tensor and remove these activations from the output tensor to generate a compressed activation tensor (aka "sparse activation tensor"). The sparsity encoder may also generate one or more sparsity maps for the output tensor. A sparsity map may indicate sparsity in at least part of the output tensor. The sparsity map may include sparsity elements (e.g., bits), each of which corresponds to a different activation in the vector and indicates whether the corresponding activation is zeroed or not.

The ODU 1090 may write the compressed activation tensor and the one or more sparsity maps into the local memory 1040. The sparse activation tensor and the one or more sparsity maps may be further loaded to the memory 1010, e.g., through the DMA engine 1020. Additionally or alternatively, the sparse activation tensor and the one or more sparsity maps may be loaded by the IDU 1060 to the processing engine 1070 for further computation, e.g., for performing a deep learning operation in the next layer.

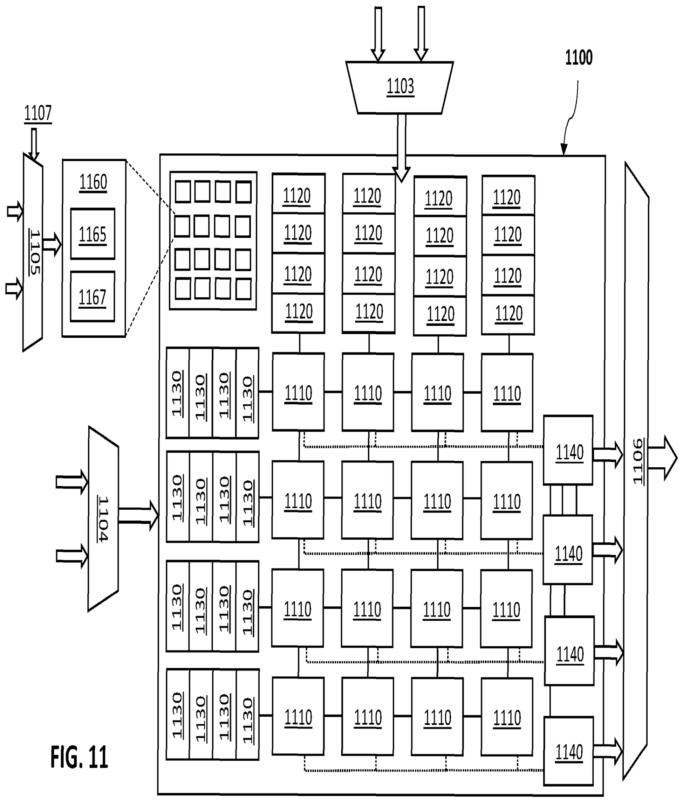

FIG. 11 illustrates an example sparse cell 1100, in accordance with various embodiments. The sparse cell 1100 may be a processing cell in a processing engine, e.g., the processing engine 1070 in FIG. 10. The sparse cell 1100 includes 16 MAC units 1110 (individually referred to as "MAC unit 1110"), which constitutes a MAC array having four rows and four columns. The MAC array has a spatial shape of 4x4, meaning the height of the MAC array is four and the width of the MAC array is also 11. The sparse cell 1100 also includes 16 weight register files 1120 (individually referred to as "weight register file 1120"), 16 activation register files 1130 (individually referred to as "activation register file 1130"), four row buffers 1140 (individually referred to as "row buffer 1140"), and acceleration modules 1160 (individually referred to as "acceleration module 1160"). In other embodiments, the sparse cell 1100 may include fewer, more, or different components. For example, the sparse cell 1100 may include a different number of MAC units 1110, weight register files 1120, activation register files 1130, row buffers 1140, or acceleration modules 1160. As another example, the sparse cell 1100 may include column buffers in lieu of or in addition to the row buffers 1140. Also, the shape (e.g., the height or width) of the MAC array may be different.

The MAC units 1110 are configured to perform MAC operations. Each MAC unit 1110 may include one or more multipliers and one or more adders. A multiplier may multiply an activation with a weight at a time to compute a product. In some embodiments (e.g., embodiments where the MAC unit 1110 includes multiple multipliers), the multipliers may operate simultaneously to process multiple activation-weight pairs and compute multiple products in one cycle. An adder may accumulate products computed by the multipliers. Even though not shown in FIG. 11, the sparse cell may include an adder tree including a plurality of adder tiers. The first tier may receive outputs of a plurality of MAC units 1110. The number of adders in the first tier may be half of the number of the MAC units 1110, and each adder may accumulate the outputs of two MAC units 1110. The second tier may receive outputs of adders in the first tier. The number of adders in the second tier may be half of the number of adders in the first tier, and each adder in the second tier may accumulate the outputs of two adders in the first tier. The adder tree may include one or more other tiers. The last tier may include a single adder that accumulates outputs of adders in the second last tier to compute a partial sum of the sparse cell 1100.

The weight register files 1120 store weights to be processed in MAC operations. In the embodiments of FIG. 11, four weight register files 1120 are grouped into a storage set that stores data to be used by a column of MAC units 1110. There are four storage sets corresponding to the four columns of MAC units 1110. In some embodiments, a weight register file 1120 may correspond to a MAC unit 1110 and store data to be processed by the MAC unit. In some embodiments, all the 16 weight register files 1120 constitute a weight storage unit.

The activation register files 1130 stores activations to be processed in MAC operations. In the embodiments of FIG. 11, four activation register files 1130 are grouped into a storage set that stores data to be used by a row of MAC units 1110. There are four storage sets corresponding to the four rows of MAC units 1110. In some embodiments, an activation register file 1130 may correspond to a MAC unit 1110 and store data to be processed by the MAC unit. In some embodiments, all the 16 activation register files 1130 constitute an activation storage unit. The row buffers 1140 store outputs of the MAC units 1110. Each row buffer 1140 may drain outputs of a single row of MAC units 1110.

The acceleration module 1160 facilitates acceleration of computations in the sparse cell 1100 based on mixed formats of weights. In the embodiments of FIG. 11, each acceleration module 1160 may control acceleration of computations in a different MAC unit 1110. The number of acceleration modules 1160 in the sparse cell 1100 is the same as the number of MAC units 1110 in the sparse cell 1100. In other embodiments, an acceleration module 1160 may control acceleration in multiple MAC units 1110. As shown FIG. 11, each acceleration module 1160 includes a storage unit 1165 and a control logic 1167. The storage unit 1165 stores mixed-format maps. The control logic 1167 may control distributions of activations and weights stored from the weight register files 1120 and the activation register files 1130 to the MAC units 1110 based on mixed-format maps. In some embodiments, the control logic 1167 may distribute a weight operand and a corresponding activation operation to a MAC unit 1110 for an MAC operation. The weight operand may be a subblock (e.g., a column) of a weight block. All the weights in the weight operand may be in the same output channel and have the same spatial position, but the weights may be in different input channels from each other.

In some embodiments, a weight operand may include one or more uncompressed weight and one or more compressed weights. The control logic 1167 may distribute compressed weights to MAC units 1110 in a different manner from which the control logic 1167 distributes uncompressed weights. In some embodiments (e.g., embodiments in which the compressed weights are zeros), the control logic 1167 may select nonzero weights stored in the weight register files 1120 based on the mixed-format map and distribute these nonzero weights to the MAC unit 1110 for computation. The control logic 1167 may also distribute activations, which correspond to the nonzero weights, to the MAC unit 1110 from in the activation register files 1130. The control logic 1167 may ignore zero weights and activations corresponding the zero weights so that these weights and activations can be skipped from computation.

In other embodiments (e.g., embodiments in which the compressed weights have a lower precision than the uncompressed weights), the control logic 1167 may distribute both compressed weights and uncompressed weights to the MAC unit 1110 but in different manners. For example, the control logic 1167 may distribute one compressed weight to the MAC unit 1110 for one computation cycle of the MAC unit 1110 but distribute one uncompressed weight to the MAC unit 1110 for multiple computation cycles of the MAC unit 1110. The MAC unit 1110 may have a multiplier that can compute a product of a compressed weight with its corresponding activation in one computation cycle. The multiplier may compute multiple products for an uncompressed weight. Each of these products may be a result of multiplying a portion of the uncompressed weight with the corresponding activation in one computation cycle. One or more of these products may be shifted and then accumulated with one or more other products to compute the product of the uncompressed weight and the activation. As another example, the control logic 1167 may distribute multiple compressed weights to the MAC unit 1110 for one computation cycle of the MAC unit 1110 but distribute one uncompressed weight to the MAC unit 1110 for one computation cycle of the MAC unit 1110. The MAC unit 1110 in this example may have multiple multipliers that can compute multiple products for a uncompressed weight in one operating cycle, in which each multiplier may multiply a portion of the uncompressed weight with the corresponding activation. Each multiplier may multiply a compressed weight with the corresponding activation in one compute cycle so that multiple multipliers can handle multiple uncompressed weights in one computation cycle.

As shown in FIG. 11, the sparse cell 1100 is associated with multiplexers (MUXs) 1103, 1104, 1105, and 1106. In other embodiments, the sparse cell 1100 may be associated with a different number of MUXs or other devices. The MUX 1103 facilitates loading weights, e.g., from the local memory 340, into the weight register files 1120. The MUX 1104 facilitates loading activations, e.g., from the local memory 340, into the activation register files 1130. The MUX 1105 facilitates loading mixed-format maps into the storage unit 1165. The MUX 1106 may be a drain MUX that can facilitate draining outputs of the MAC units 1110, e.g., to the local memory 340.

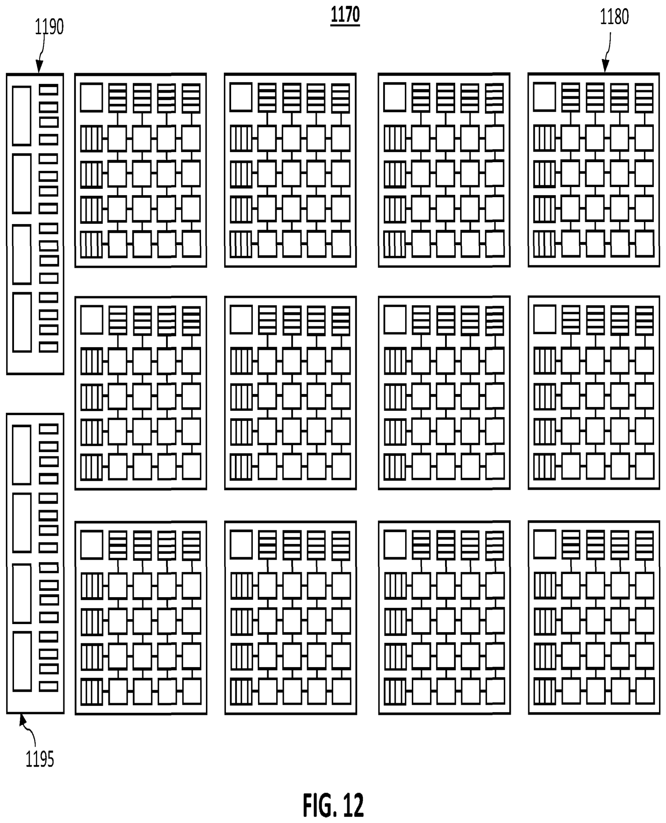

FIG. 12 illustrates a sparse cell array 1170, in accordance with various embodiments. The sparse cell array 1170 may be an example of the processing engine 1070 in FIG. 10. In FIG. 12, the sparse cell array 1170 includes sparse cells 1180 (individually referred to as "sparse cell 1180") arranged in four columns and four rows, an activation memory 1190, and a weight memory 1195. In other embodiments, the sparse cell array 1170 may include fewer, more, or different components. For instance, the sparse cell array 1170 may include a different number of columns, rows, or sparse cells 1180.

Each sparse cell 1180 may perform accelerated MAC operations. MAC operations in the sparse cells 1180 may be accelerated based on mixed formats of weights. An embodiment of a sparse cell 1180 may be the sparse cell 1100 in FIG. 11. The activation memory 1190 stores activations, such as activations in input tensors of neural network operations. Activations may be loaded from the activation memory 1190 to sparse cells 1180, e.g., to activation register files. The weight memory 1195 stores weights, such as weights in filters of neural network operations. Weights may be loaded from the weight memory 1195 to sparse cells 1180, e.g., to weight register files. The activation memory 1190 or weight memory 1195 may be a buffer.

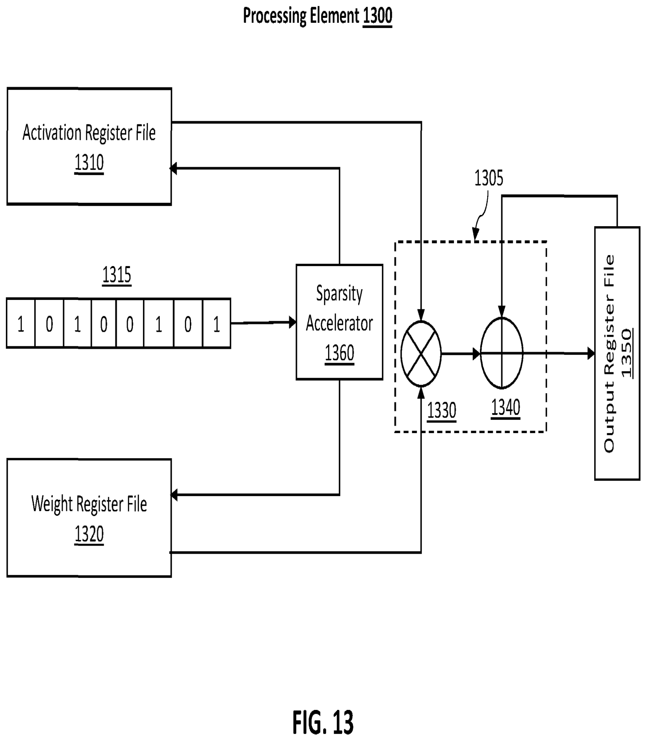

FIG. 13 illustrates an example PE 1300, in accordance with various embodiments. The PE 1300 may be a unit component of a processing cell, e.g., a processing cell in the processing engine 1070 in FIG. 10. In the embodiments of FIG. 13, the PE 1300 includes an MAC unit 1305, an activation register file 1310, a weight register file 1320, an output register file 1350, and a sparsity accelerator 1360. The MAC unit 1305 includes a multiplier 1330 and an adder 1340. In other embodiments, the PE 1300 may include fewer, more, or different components.

The activation register file 1310 stores an activation operand, which may be a context. The activation register file 1310 may be an example of the activation register files 1130 in FIG. 11. The weight register file 1320 stores a weight operand. The weight register file 1320 may be an example of the weight register files 1120 in FIG. 11. The activation operand and weight operand may be loaded from a memory (e.g., the memory 340) into the activation register file 1310 and the weight register file 1320, respectively. The sparsity accelerator 1360 receives a sparsity bitmap 1315 that corresponds to the sparse tensor in the weight register file 1320. The sparsity bitmap 1315 may be a combined sparsity bitmap when the MAC unit 1305 operates in a combined compute mode. The sparsity bitmap 1315 may be an activation sparsity bitmap when the MAC unit 1305 operates in an activation compute mode. The sparsity bitmap 1315 may be a weight sparsity bitmap when the MAC unit 1305 operates in a weight compute mode. The sparsity bitmap 1315 may have the same size (e.g., the same number of elements) as or a larger size than the activation operand or the weight operand.

Using the sparsity bitmap 1315, the sparsity accelerator 1360 selects four activations from the activation register file 1310 and selects four weights from the weight register file 1320. The sparsity accelerator 1360 transmits the selected activations and weights to the multiplier 1330. These selected data elements correspond to the nonzero elements of the sparsity bitmap 1315. The four selected activations and the four selected weights may constitute four activation-weight pairs. The multiplier 1330 may compute a product based on each activation-weight pair and therefore, compute four products in total. The four products may be provided to the adder 1340. Even though FIG. 13 shows a single multiplier 1330, the MAC unit 1305 may include multiple multipliers that can perform multiple multiplication operations at the same time.

The adder 1340 accumulates the four products and computes a unit-level internal partial sum. The four unselected elements of the dense tensor are not processed to save power and time, which would not impact the value of the unit-level internal partial sum. For instance, when the dense tensor is a dense activation tensor, the weights corresponding to the unselected activations are zeros so the products of the unselected activations and the weights would all be zero and have no contribution to the unit-level internal partial sum or other partial sums computed by the sparse cell. Similarly, when the dense tensor is a dense weight tensor, the activations corresponding to the unselected weights are zeros so the products of the unselected weights and the activations would all be zero and have no contribution to the unit-level internal partial sum or other partial sums computed by the sparse cell. In other embodiments, the MAC unit 1305 may operate in a dense mode in which the sparsity bitmap 1315 is not used and the sparsity accelerator 1360 is inactive. The MAC unit 1305 may process all the activations in the activation operand and all the weights in the weight operand.

The unit-level internal partial sum may be stored in the output register file 1350. In some embodiments, the unit-level internal partial sum may be used multiple times. For instance, the activation operand may represent N data blocks in the input tensor of the convolution, where N is an integer greater than 1. Instead of processing all the N data blocks to compute N unit-level internal partial sums, the unit-level internal partial sum is computed once and used N times in the convolutional layers as N unit-level internal partial sums.

In some embodiments, the PE 1300 receives one or more PE-level internal partial sums from one or more other PEs. The adder 1340 or an accumulator (not shown in FIG. 13) can accumulate the one or more PE-level internal partial sums with the PE-level internal partial sum of the PE 1300 and store the result of the accumulation (i.e., a multi-PE internal partial sum) in the output register file 1350. The one or more other PEs may be in the same column as the PE 1300 in a sparse cell. The multi-unit internal partial sum may be a column-level internal partial sum. In some embodiments, the PE-level internal partial sum of the PE 1300 or the multi-unit internal partial sum may be sent to one or more other PEs for further accumulation.

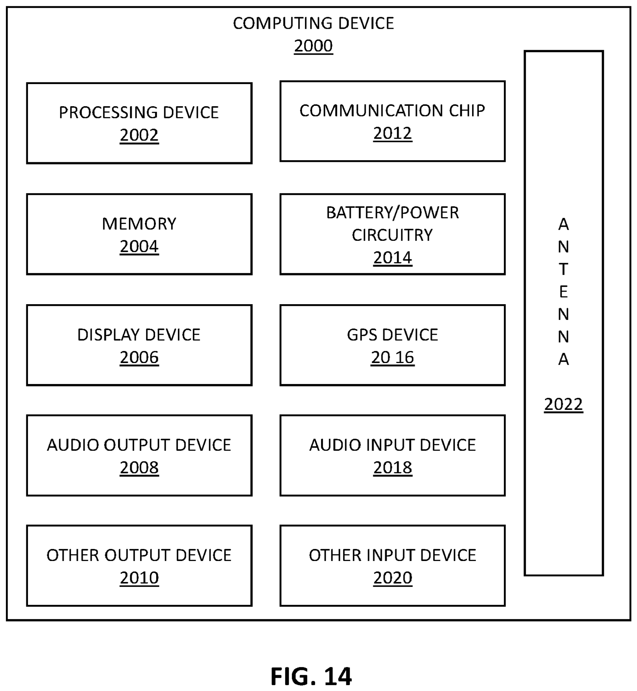

FIG. 14 is a block diagram of an example computing device 2000, in accordance with various embodiments. In some embodiments, the computing device 2000 can be used as at least part of the DNN system 300. A number of components are illustrated in FIG. 14 as included in the computing device 2000, but any one or more of these components may be omitted or duplicated, as suitable for the application. In some embodiments, some or all of the components included in the computing device 2000 may be attached to one or more motherboards. In some embodiments, some or all of these components are fabricated onto a single system on a chip (SoC) die. Additionally, in various embodiments, the computing device 2000 may not include one or more of the components illustrated in FIG. 14, but the computing device 2000 may include interface circuitry for coupling to the one or more components. For example, the computing device 2000 may not include a display device 2006, but may include display device interface circuitry (e.g., a connector and driver circuitry) to which a display device 2006 may be coupled. In another set of examples, the computing device 2000 may not include an audio input device 2018 or an audio output device 2008 but may include audio input or output device interface circuitry to which an audio input device 2018 or audio output device 2008 may be coupled.

The computing device 2000 may include a processing device 2002 (e.g., one or more processing devices). The processing device 2002 processes electronic data from registers and/or memory to transform that electronic data into other electronic data that may be stored in registers and/or memory. The computing device 2000 may include a memory 2004, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 2004 may include memory that shares a die with the processing device 2002. In some embodiments, the memory 2004 includes one or more non-transitory computer-readable media storing instructions executable to perform operations for training DNNs (e.g., the method 1400 described in conjunction with FIG. 14) or some operations performed by one or more components of the AI system 100. The instructions stored in the one or more non-transitory computer-readable media may be executed by the processing device 2002.

In some embodiments, the computing device 2000 may include a communication chip 2012 (e.g., one or more communication chips). For example, the communication chip 2012 may be configured for managing wireless communications for the transfer of data to and from the computing device 2000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 2012 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 2012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 2012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 2012 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 2012 may operate in accordance with other wireless protocols in other embodiments. The computing device 2000 may include an antenna 2022 to facilitate wireless communications and/or to receive other wireless communications (such as AM or FM radio transmissions).

In some embodiments, the communication chip 2012 may manage wired communications, such as electrical, optical, or any other suitable communication protocols (e.g., the Ethernet). As noted above, the communication chip 2012 may include multiple communication chips. For instance, a first communication chip 2012 may be dedicated to shorter-range wireless communications such as Wi-Fi or Bluetooth, and a second communication chip 2012 may be dedicated to longer-range wireless communications such as global positioning system (GPS), EDGE, GPRS, CDMA, WiMAX, LTE, EV-DO, or others. In some embodiments, a first communication chip 2012 may be dedicated to wireless communications, and a second communication chip 2012 may be dedicated to wired communications.

The computing device 2000 may include battery/power circuitry 2014. The battery/power circuitry 2014 may include one or more energy storage devices (e.g., batteries or capacitors) and/or circuitry for coupling components of the computing device 2000 to an energy source separate from the computing device 2000 (e.g., AC line power).

The computing device 2000 may include a display device 2006 (or corresponding interface circuitry, as discussed above). The display device 2006 may include any visual indicators, such as a heads-up display, a computer monitor, a projector, a touchscreen display, a liquid crystal display (LCD), a light-emitting diode display, or a flat panel display, for example.

The computing device 2000 may include an audio output device 2008 (or corresponding interface circuitry, as discussed above). The audio output device 2008 may include any device that generates an audible indicator, such as speakers, headsets, or earbuds, for example.

The computing device 2000 may include an audio input device 2018 (or corresponding interface circuitry, as discussed above). The audio input device 2018 may include any device that generates a signal representative of a sound, such as microphones, microphone arrays, or digital instruments (e.g., instruments having a musical instrument digital interface (MIDI) output).

The computing device 2000 may include a GPS device 2016 (or corresponding interface circuitry, as discussed above). The GPS device 2016 may be in communication with a satellite-based system and may receive a location of the computing device 2000, as known in the art.

The computing device 2000 may include another output device 2010 (or corresponding interface circuitry, as discussed above). Examples of the other output device 2010 may include an audio codec, a video codec, a printer, a wired or wireless transmitter for providing information to other devices, or an additional storage device.

The computing device 2000 may include another input device 2020 (or corresponding interface circuitry, as discussed above). Examples of the other input device 2020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 2000 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 2000 may be any other electronic device that processes data.

The following paragraphs provide various examples of the embodiments disclosed herein.

Example 1 provides a method of training a DNN, including providing an input tensor and a weight tensor of a layer in the DNN to a NPU for training the DNN through a training process, the training process including a forward operation and a backward operation; offloading the forward operation to a MatMul kernel on a NPU, the MatMul kernel to execute the layer by performing a first MatMul operation on the input tensor and weight tensor and to produce an output tensor of the layer; offloading the backward operation to the MatMul kernel, the MatMul kernel to compute a gradient of a loss by performing a second MatMul operation on the input tensor and a gradient of the output tensor; and training the layer by updating the weight tensor based on the gradient of the loss.

Example 2 provides the method of example 1, in which the gradient of the loss is a weight gradient of the loss, in which The MatMul kernel is further to compute an input gradient of the loss for the backward operation by performing a third MatMul operation on the gradient of the output tensor and the weight tensor, in which the weight tensor is updated further based on the input gradient of the loss.

Example 3 provides the method of example 2, in which the input tensor is an output of a previous layer in the DNN, in which the method further includes propagating the input gradient of the loss from the layer to the previous layer.

Example 4 provides the method of any one of examples 1-3, further including during the forward operation, computing the loss by applying a loss function on the output tensor of the layer and one or more reference values.

Example 5 provides the method of any one of examples 1-4, further including during the backward operation, computing the gradient of the output tensor based on the loss, the output tensor of the layer, and one or more reference values.

Example 6 provides the method of any one of examples 1-5, in which the gradient of the output tensor is computed using an automatic differentiation module, in which the automatic differentiation module is offloaded to the NPU.

Example 7 provides the method of any one of examples 1-6, in which the input tensor or weight tensor includes half-precision floating point values or brain floating point values.

Example 8 provides the method of any one of examples 1-7, in which the MatMul kernel is configured to perform MatMul operations on tensors of different dimensions.

Example 9 provides one or more non-transitory computer-readable media storing instructions executable to perform operations for training a DNN, the operations including providing an input tensor and a weight tensor of a layer in the DNN to a NPU for training the DNN through a training process, the training process including a forward operation and a backward operation; offloading the forward operation to a matrix multiplication (MatMul) kernel on a NPU, the MatMul kernel to execute the layer by performing a first MatMul operation on the input tensor and weight tensor and to produce an output tensor of the layer; offloading the backward operation to the MatMul kernel, the MatMul kernel to compute a gradient of a loss by performing a second MatMul operation on the input tensor and a gradient of the output tensor; and training the layer by updating the weight tensor based on the gradient of the loss.

Example 10 provides the one or more non-transitory computer-readable media of example 9, in which the gradient of the loss is a weight gradient of the loss, in which The MatMul kernel is further to compute an input gradient of the loss for the backward operation by performing a third MatMul operation on the gradient of the output tensor and the weight tensor, in which the weight tensor is updated further based on the input gradient of the loss.

Example 11 provides the one or more non-transitory computer-readable media of example 10, in which the input tensor is an output of a previous layer in the DNN, in which the one or more non-transitory computer-readable media further includes propagating the input gradient of the loss from the layer to the previous layer.

Example 12 provides the one or more non-transitory computer-readable media of any one of examples 9-11, in which the operations further include during the forward operation, computing the loss by applying a loss function on the output tensor of the layer and one or more reference values.

Example 13 provides the one or more non-transitory computer-readable media of any one of examples 9-12, in which the operations further include during the backward operation, computing the gradient of the output tensor based on the loss, the output tensor of the layer, and one or more reference values.

Example 14 provides the one or more non-transitory computer-readable media of any one of examples 9-13, in which the gradient of the output tensor is computed using an automatic differentiation module, in which the automatic differentiation module is offloaded to the NPU.

Example 15 provides the one or more non-transitory computer-readable media of any one of examples 9-14, in which the input tensor or weight tensor includes half-precision floating point values or brain floating point values.

Example 16 provides an apparatus including a computer processor for executing computer program instructions; and a non-transitory computer-readable memory storing computer program instructions executable by the computer processor to perform operations for training a DNN, the operations including providing an input tensor and a weight tensor of a layer in the DNN to a NPU for training the DNN through a training process, the training process including a forward operation and a backward operation, offloading the forward operation to a matrix multiplication (MatMul) kernel on a NPU, the MatMul kernel to execute the layer by performing a first MatMul operation on the input tensor and weight tensor and to produce an output tensor of the layer, offloading the backward operation to the MatMul kernel, the MatMul kernel to compute a gradient of a loss by performing a second MatMul operation on the input tensor and a gradient of the output tensor, and training the layer by updating the weight tensor based on the gradient of the loss.

Example 17 provides the apparatus of example 16, in which the gradient of the loss is a weight gradient of the loss, in which The MatMul kernel is further to compute an input gradient of the loss for the backward operation by performing a third MatMul operation on the gradient of the output tensor and the weight tensor, in which the weight tensor is updated further based on the input gradient of the loss.

Example 18 provides the apparatus of example 17, in which the input tensor is an output of a previous layer in the DNN, in which the operations further include propagating the input gradient of the loss from the layer to the previous layer.

Example 19 provides the apparatus of any one of examples 16-18, in which the operations further include during the forward operation, computing the loss by applying a loss function on the output tensor of the layer and one or more reference values; and during the backward operation, computing the gradient of the output tensor based on the loss, the output tensor of the layer, and one or more reference values.

Example 20 provides the apparatus of any one of examples 16-19, in which the gradient of the output tensor is computed using an automatic differentiation module, in which the automatic differentiation module is offloaded to the NPU.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art can recognize. These modifications may be made to the disclosure in light of the above detailed description.

**Claims**

1. A method of training a neural network, comprising:

   providing an input tensor and a weight tensor of a layer in the neural network to a neural processing unit for training the neural network through a training process, the training process comprising a forward operation and a backward operation;
   offloading the forward operation to a matrix multiplication (MatMul) kernel on a neural processing unit, the MatMul kernel to execute the layer by performing a first MatMul operation on the input tensor and weight tensor and to produce an output tensor of the layer;
   offloading the backward operation to the MatMul kernel, the MatMul kernel to compute a gradient of a loss by performing a second MatMul operation on the input tensor and a gradient of the output tensor; and
   training the layer by updating the weight tensor based on the gradient of the loss.

2. The method of claim 1, wherein the gradient of the loss is a weight gradient of the loss, wherein the MatMul kernel is further to compute an input gradient of the loss for the backward operation by performing a third MatMul operation on the gradient of the output tensor and the weight tensor, wherein the weight tensor is updated further based on the input gradient of the loss.

3. The method of claim 1 or 2, further comprising:

   during the forward operation, computing the loss by applying a loss function on the output tensor of the layer and one or more reference values; or
   during the backward operation, computing the gradient of the output tensor based on the loss, the output tensor of the layer, and one or more reference values.

4. The method of any one of claims 1-3, wherein the gradient of the output tensor is computed using an automatic differentiation module, wherein the automatic differentiation module is offloaded to the neural processing unit.

5. The method of any one of claims 1-4, wherein:

   the input tensor or weight tensor includes half-precision floating point values or brain floating point values, or
   the MatMul kernel is configured to perform MatMul operations on tensors of different dimensions.

6. One or more non-transitory computer-readable media storing instructions executable to perform operations of training a neural network, the operations comprising:

   providing an input tensor and a weight tensor of a layer in the neural network to a neural processing unit for training the neural network through a training process, the training process comprising a forward operation and a backward operation;
   offloading the forward operation to a matrix multiplication (MatMul) kernel on a neural processing unit, the MatMul kernel to execute the layer by performing a first MatMul operation on the input tensor and weight tensor and to produce an output tensor of the layer;
   offloading the backward operation to the MatMul kernel, the MatMul kernel to compute a gradient of a loss by performing a second MatMul operation on the input tensor and a gradient of the output tensor; and
   training the layer by updating the weight tensor based on the gradient of the loss.

7. The one or more non-transitory computer-readable media of claim 6, wherein the gradient of the loss is a weight gradient of the loss, wherein The MatMul kernel is further to compute an input gradient of the loss for the backward operation by performing a third MatMul operation on the gradient of the output tensor and the weight tensor, wherein the weight tensor is updated further based on the input gradient of the loss.

8. The one or more non-transitory computer-readable media of claim 6 or 7, wherein the operations further comprise:

during the forward operation, computing the loss by applying a loss function on the output tensor of the layer and one or more reference values; or

during the backward operation, computing the gradient of the output tensor based on the loss, the output tensor of the layer, and one or more reference values.

9. The one or more non-transitory computer-readable media of any one of claims 6-8, wherein the gradient of the output tensor is computed using an automatic differentiation module, wherein the automatic differentiation module is offloaded to the neural processing unit.

10. The one or more non-transitory computer-readable media of any one of claims 6-9, wherein:

the input tensor or weight tensor includes half-precision floating point values or brain floating point values, or the MatMul kernel is configured to perform MatMul operations on tensors of different dimensions.

11. An apparatus comprising:

a computer processor for executing computer program instructions; and
a non-transitory computer-readable memory storing computer program instructions executable by the computer processor to perform operations for training a neural network, the operations comprising:

providing an input tensor and a weight tensor of a layer in the neural network to a neural processing unit for training the neural network through a training process, the training process comprising a forward operation and a backward operation,
offloading the forward operation to a matrix multiplication (MatMul) kernel on a neural processing unit, the MatMul kernel to execute the layer by performing a first MatMul operation on the input tensor and weight tensor and to produce an output tensor of the layer,
offloading the backward operation to the MatMul kernel, the MatMul kernel to compute a gradient of a loss by performing a second MatMul operation on the input tensor and a gradient of the output tensor, and
training the layer by updating the weight tensor based on the gradient of the loss.

12. The apparatus of claim 11, wherein the gradient of the loss is a weight gradient of the loss, wherein The MatMul kernel is further to compute an input gradient of the loss for the backward operation by performing a third MatMul operation on the gradient of the output tensor and the weight tensor, wherein the weight tensor is updated further based on the input gradient of the loss.

13. The apparatus of claim 11 or 12, wherein the operations further comprise:

during the forward operation, computing the loss by applying a loss function on the output tensor of the layer and one or more reference values; or
during the backward operation, computing the gradient of the output tensor based on the loss, the output tensor of the layer, and one or more reference values.

14. The apparatus of any one of claims 11-13, wherein the gradient of the output tensor is computed using an automatic differentiation module, wherein the automatic differentiation module is offloaded to the neural processing unit.

15. The apparatus of any one of claims 11-13, wherein:

the input tensor or weight tensor includes half-precision floating point values or brain floating point values, or the MatMul kernel is configured to perform MatMul operations on tensors of different dimensions.

AI System <u>100</u>

DNN Module <u>110</u>

Interface Module
<u>130</u>

Training Module
<u>140</u>

Automatic
Differentiation
Module <u>150</u>

Compressing
Module <u>160</u>

Compiler
<u>170</u>

Datastore
<u>170</u>

Central
Processing
Unit
<u>120A</u>

Neural
Processing
Unit
<u>120B</u>

# FIG. 1

**FIG. 2**

Tensor 310     Tensor 330     Tensor 330

FIG. 3

$401\ x$

$402\ w$

DNN 410

$F(x, w)$

$403\ y$

$y_{ref}\ 404$

Loss Function 420

$G(y, y_{ref})$

$L\ \ 405$

**FIG. 4**

**FIG. 5**

**FIG. 6**

700

Provide an input tensor and a weight tensor of a layer in the neural network to a neural processing unit for training the neural network through a training process, the training process comprising a forward operation and a backward operation
710

Offload the forward operation to a MatMul kernel on a neural processing unit, the MatMul kernel to execute the layer by performing a first MatMul operation on the input tensor and weight tensor and to produce an output tensor of the layer
720

Offload the backward operation to the MatMul kernel, the MatMul kernel to compute a gradient of a loss by performing a second MatMul operation on the input tensor and a gradient of the output tensor
730

Train the layer by updating the weight tensor based on the gradient of the loss
740

# FIG. 7

FIG. 8

CNN 900

Convolutional Layer 910

Pooling Layer 920

Fully-connected Layer 930

FIG. 9

**FIG. 10**

FIG. 11

FIG. 12

Processing Element <u>1300</u>

FIG. 13

COMPUTING DEVICE
2000

| PROCESSING DEVICE 2002 | COMMUNICATION CHIP 2012 |

| MEMORY 2004 | BATTERY/POWER CIRCUITRY 2014 |

| DISPLAY DEVICE 2006 | GPS DEVICE 20 16 |

| AUDIO OUTPUT DEVICE 2008 | AUDIO INPUT DEVICE 2018 |

| OTHER OUTPUT DEVICE 2010 | OTHER INPUT DEVICE 2020 |

ANTENNA 2022

**FIG. 14**

<table>
<tr><td>Europäisches Patentamt<br>European Patent Office<br>Office européen des brevets</td><td>**EUROPEAN SEARCH REPORT**</td><td>**Application Number**<br><br>EP 25 21 7770</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAN HUSHENG ET AL: "TensorTEE: Unifying Heterogeneous TEE Granularity for Efficient Secure Collaborative Tensor Computing",<br>PROCEEDINGS OF THE 32ND ACM INTERNATIONAL CONFERENCE ON MULTIMEDIA, ACMPUB27, NEW YORK, NY, USA,<br>27 April 2024 (2024-04-27), pages 282-297, XP059892490,<br>DOI: 10.1145/3622781.3674168<br>ISBN: 979-8-4007-1077-3<br>* page 282 - page 285 *<br>* figures 1,8,14 *<br>* table 1 * | 1-15 | INV.<br>G06N3/063<br>G06N3/0455<br>G06N3/0464<br>G06N3/084<br>G06N3/09 |
| A | KIM JUNGWOO ET AL: "Improving Data Reuse in NPU On-chip Memory with Interleaved Gradient Order for DNN Training",<br>2023 56TH IEEE/ACM INTERNATIONAL SYMPOSIUM ON MICROARCHITECTURE (MICRO), ACM,<br>28 October 2023 (2023-10-28), pages 438-451, XP034539020,<br>DOI: 10.1145/3613424.3614299<br>[retrieved on 2024-02-07]<br>* page 438 - page 446 * | 1-15 | |
| A | LEE JINSU ET AL: "An Overview of Energy-Efficient Hardware Accelerators for On-Device Deep-Neural-Network Training",<br>IEEE OPEN JOURNAL OF THE SOLID-STATE CIRCUITS SOCIETY, IEEE,<br>vol. 1, 13 October 2021 (2021-10-13), pages 115-128, XP011885628,<br>DOI: 10.1109/OJSSCS.2021.3119554<br>[retrieved on 2021-10-20]<br>* the whole document * | 1-15 | TECHNICAL FIELDS SEARCHED (IPC)<br><br>G06N |

-/--

The present search report has been drawn up for all claims

| Place of search | Date of completion of the search | Examiner |
|---|---|---|
| The Hague | 6 March 2026 | Keresztury, Bence |

Europäisches Patentamt

European Patent Office

Office européen des brevets

## EUROPEAN SEARCH REPORT

**Application Number**

EP 25 21 7770

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIM IN HYUNJUN KIM@YONSEI AC KR ET AL: "Memory-efficient DNN training on mobile devices", PROCEEDINGS OF THE 31ST ACM SIGSOFT INTERNATIONAL SYMPOSIUM ON SOFTWARE TESTING AND ANALYSIS, ACM, NEW YORK, NY, USA, 27 June 2022 (2022-06-27), pages 464-476, XP058825457, DOI: 10.1145/3498361.3539765 ISBN: 978-1-4503-9379-9 * page 464 - page 470 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 6 March 2026 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63738177